(19) Europäisches Patentamt / European Patent Office / Office européen des brevets

(11) **EP 3 798 989 B1**

(12) **EUROPÄISCHE PATENTSCHRIFT**

(45) Veröffentlichungstag und Bekanntmachung des Hinweises auf die Patenterteilung:
**20.07.2022   Patentblatt 2022/29**

(21) Anmeldenummer: **19199842.6**

(22) Anmeldetag: **26.09.2019**

(51) Internationale Patentklassifikation (IPC):
*G06T 11/00* *(2006.01)*

(52) Gemeinsame Patentklassifikation (CPC):
**G06T 11/00**

(54) **COMPUTERIMPLEMENTIERTES VERFAHREN ZUR BEREITSTELLUNG VON AUSGANGSDATEN, DIE ZUM TRAINING UND/ODER ZUR VALIDIERUNG EINES ALGORITHMUS DIENEN**

COMPUTER-IMPLEMENTED METHOD FOR PROVIDING OUTPUT DATA FOR TRAINING AND / OR VALIDATING AN ALGORITHM

PROCÉDÉ MIS EN OEUVRE PAR ORDINATEUR PERMETTANT DE FOURNIR DES DONNÉES DE SORTIE SERVANT À L'APPRENTISSAGE ET / OU À LA VALIDATION D'UN ALGORITHME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.03.2021   Patentblatt 2021/13**

(73) Patentinhaber: **Siemens Healthcare GmbH**
**91052 Erlangen (DE)**

(72) Erfinder:
• **Battle, Xavier, Dr.**
**91301 Forchheim (DE)**
• **Flohr, Thomas, Dr.**
**91486 Uehlfeld (DE)**

(56) Entgegenhaltungen:
**EP-A1- 3 188 058     EP-A1- 3 282 379**
**EP-A1- 3 438 869**

• **REN ZHONGZHENG ET AL: "Learning to Anonymize Faces for Privacy Preserving Action Detection", 6. Oktober 2018 (2018-10-06), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 639 - 655, XP047488312, ISBN: 978-3-642-17318-9 [gefunden am 2018-10-06] * Zusammenfassung ***
• **SHIN HOO-CHANG ET AL: "Medical Image Synthesis for Data Augmentation and Anonymization Using Generative Adversarial Networks", 12. September 2018 (2018-09-12), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 1 - 11, XP047485123, ISBN: 978-3-642-17318-9 [gefunden am 2018-09-12] * Zusammenfassung ***

**Beschreibung**

Die Erfindung betrifft ein computerimplementiertes Verfahren zur Bereitstellung von Ausgangsdaten, die zum Training und/oder zur Validierung eines Algorithmus dienen, dessen Verarbeitungsergebnis einen durch die Ausgangsdaten abgebildeten anatomischen Bereich eines Untersuchungsobjekts betrifft. Daneben betrifft die Erfindung ein eine Bereitstellungs- und/oder Trainingseinrichtung, ein Computerprogramm sowie einen computerlesbaren Datenträger.

Im Rahmen der medizinischen Bildgebung werden eine Vielzahl von Algorithmen genutzt, die beispielsweise dazu dienen, Bilddaten zu segmentieren, zu klassifizieren, in Abhängigkeit der Bilddaten spätere Bildgebungsvorgänge oder andere Vorrichtungen zu steuern, medizinisches Personal bei der Erkennung bzw. Beurteilung von anatomischen Abweichungen zu unterstützen und Ähnliches. Hierbei ist es einerseits hochrelevant, Algorithmen vor ihrem Einsatz im Feld zu validieren, das heißt sicherzustellen, dass sie bei allen Eingangsdaten vernünftige Ergebnisse liefern. Andererseits werden entsprechende Algorithmen zunehmend durch Verfahren des Maschinenlernens trainiert, wobei Verfahren des Maschinenlernens typischerweise eine große Menge von Trainingsdatensätzen erfordern, um ein entsprechendes Training durchzuführen.

Das Dokument EP 3282379 A1 offenbart ein Verfahren zur Archivierung anonymisierter volumetrischer Daten aus einer medizinischer Bildvisualisierungssoftware.

Sowohl zur Validierung als auch zum Training von Algorithmen ist es typischerweise vorteilhaft, Bilddaten oder Rohdaten zu nutzen, die an einem realen Untersuchungsobjekt aufgenommen wurden. Eine vielversprechende Quelle für entsprechende Roh- bzw. Bilddaten wären Daten, die im klinischen Umfeld ohnehin aufgenommen werden. Zudem können entsprechende Daten auch von Freiwilligen erfasst werden. Hierbei ist es jedoch wünschenswert und teils auch aus rechtlichen Gründen erforderlich, entsprechende Daten vor einer weiteren Nutzung zu anonymisieren. Selbst, falls eine Einwilligung von Personen, deren Daten genutzt werden, zu einer personenbezogenen Datenverarbeitung vorliegt, können bei einer Nutzung von nicht anonymisierten Daten erhebliche Einschränkungen bezüglich der weiteren Nutzung der Daten, beispielsweise bezüglich einer Nutzung im Ausland bzw. eines Personenkreises, der auf entsprechende Daten zugreifen kann, resultieren. Es ist daher üblich, einen Bilddatensatz derart zu modifizieren, dass Metadaten, wie der Name einer Person, Geburtsdaten oder Ähnliche personenbezogene Daten, gelöscht oder anderweitig ersetzt werden.

Sollen Rohdaten bzw. Bilddaten zur Validierung bzw. zum Training genutzt werden, kann hierbei jedoch problematisch sein, dass bereits anhand des Inhalts der Bild- bzw. Rohdaten selbst eine Identifizierung des Untersuchungsobjekts möglich sein kann. Wird beispielsweise durch einen Computertomographen oder einen Magnetresonanztomographen ein Ganzkörperscan durchgeführt bzw. der Bereich des Kopfes abgebildet, kann es beispielsweise möglich sein, in rekonstruierten Bilddaten anhand der Haut bzw. des subkutanen Fettgewebes eine Gesichtsform zu erkennen bzw. andere potentiell identifizierende Merkmale wie Zähne oder Augen aufzulösen. Da somit bereits die zur Validierung bzw. zum Training genutzten Daten selbst eine Identifikation des Untersuchungsobjekts ermöglichen können, können entsprechende Daten typischerweise nur sehr eingeschränkt zum Training bzw. zur Validierung von Algorithmen genutzt werden.

Der Erfindung liegt somit die Aufgabe zugrunde, einen Ansatz zum Training bzw. zur Validierung von Algorithmen anzugeben, der die beschriebene Problematik, dass Personen anhand der Trainings- bzw. Validierungsdaten identifiziert werden können, beseitigt oder zumindest eine entsprechende Identifikation deutlich erschwert und somit das Problem reduziert.

Die Aufgabe wird durch ein computerimplementiertes Verfahren nach Anspruch 1 gelöst.

Im Rahmen der Erfindung wurde erkannt, dass Bild- bzw. Rohdaten häufig dazu genutzt werden, Algorithmen zu trainieren bzw. zu validieren, deren Ergebnis anatomische Bereiche betrifft, die für eine Identifikation einer Person wenig geeignet sind, da sie beispielsweise nicht ohne hohen Aufwand sichtbar gemacht werden können bzw. nur geringfügig zwischen Personen variieren oder keine eindeutige Zuordnung der Merkmale zu einer Person ermöglichen. Dies gilt beispielsweise für eine Vielzahl von inneren Organen, beispielsweise die Lunge oder das Herz, das Skelett, das Venen- bzw. Arteriensystem des Blutkreislaufes, etc. Aufgrund der genutzten Aufnahmegeometrien werden jedoch häufig zusätzlich weitere anatomische Bereiche, beispielsweise der Bereich eines Gesichts, abgebildet, wodurch wie obig erläutert eine Identifikation des Untersuchungsobjekts möglich sein kann.

Daher wird vorgeschlagen, Trainings- bzw. Validierungsdaten nicht unmittelbar zur Verfügung zu stellen, sondern stattdessen die Ausgangsdaten des obig erläuterten computerimplementierten Verfahrens zu nutzen. Da hierbei die Bilddaten bzw. die Rohdaten derart verändert werden, dass die Abbildung des Weiteren anatomischen Bereichs, also insbesondere wenigstens eines Bereichs, der für eine Identifizierung des Untersuchungsobjekts relevant ist, verfremdet oder allgemein verändert wird, kann hierdurch die nachträgliche Identifikation des Untersuchungsobjekts anhand der Ausgangsdaten unmöglich gemacht oder zumindest deutlich erschwert werden.

Die Zuordnung der Ausgangsdaten zu einem bestimmten Untersuchungsobjekt ist somit deutlich erschwert, vorzugsweise sogar unmöglich, wodurch eine vollständige oder zumindest deutlich verbesserte Anonymisierung der zum Training bzw. zur Validierung eines Algorithmus dienenden Daten erreicht werden kann. Dies kann einerseits die Bereitwilligkeit von Untersuchungsobjekten erhöhen, an ihnen erfasste Daten zum Training bzw. zur Validierung von Algorithmen bereitzustellen, und andererseits können hierdurch unter Umständen Einschränkungen für die Weiterverwendung entsprechender Daten wegfallen, da beispielsweise bei einer ausreichenden Modifikation entsprechende Daten nicht mehr notwendig als personenbezogene Daten zu betrachten sind.

Anhand der Ausgangsdaten des erfindungsgemäßen Verfahrens können eine Vielzahl verschiedener Algorithmen trainier- bzw. validierbar sein. Beispielsweise können die Ausgangsdaten dazu dienen, einen Algorithmus zu trainieren oder zu validieren, der den anatomischen Bereich oder wenigstens einen Teilbereich des anatomischen Bereichs segmentiert oder klassifiziert. Ist der anatomische Bereich beispielsweise der Bereich der Lunge oder eines anderen inneren Organs, so können beispielsweise potentielle Läsionen segmentiert und/oder klassifiziert werden.

Die Ausgangsdaten können insbesondere Trainingsdaten zum Trainieren des Algorithmus im Rahmen eines überwachten Lernens oder einen Teil dieser Trainingsdaten bilden. Soll beispielsweise ein Algorithmus zum Segmentieren oder Klassifizieren von Teilbereichen des anatomischen Bereiches trainiert werden, so kann ein jeweiliger Trainingsdatensatz Rohdaten des Bildgebungsverfahrens und zugehörige Informationen zur Segmentierung bzw. Klassifizierung umfassen, die beispielsweise durch einen menschlichen Fachmann oder einen anderen Algorithmus ermittelt werden können. Hierbei ist es möglich, dass die Segmentierung bzw. Klassifizierung durch den menschlichen Fachmann oder den anderen Algorithmus bereits anhand der Ausgangsdaten erfolgt, die durch das erfindungsgemäße Verfahren bereitgestellt werden. Insbesondere, wenn die Eingangsdaten aus dem klinischen Alltag entstammen, ist es auch möglich, dass ein Fachmann oder ein anderer Algorithmus eine Segmentierung und/oder Klassifizierung von Teilbereichen der Rohdaten bzw. von aus den Rohdaten rekonstruierten Bilddatensätzen durchführt. Um diese Segmentierung oder Klassifizierung im Rahmen eines späteren Trainings oder einer späteren Validierung eines Algorithmus zu nutzen, können die Eingangsdaten anschließend durch das erfindungsgemäße Verfahren verarbeitet werden, um entsprechend modifizierte Ausgangsdaten bereitzustellen, wodurch die Trainingsdatensätze anonymisiert oder zumindest quasi-anonymisiert bereitgestellt werden können.

In den obigen Erläuterungen ist die Nutzung einer Segmentierung oder Klassifizierung als Verarbeitungsergebnis rein beispielhaft. Durch den Fachmann, einen anderen Algorithmus oder auf andere Weise können auch andere gewünschte Verarbeitungsergebnisse bereitgestellt werden, um Trainingsdatensätze für einen Algorithmus bereitzustellen, der ein entsprechendes Verarbeitungsergebnis ermitteln soll. Trainingsdatensätze bzw. Datensätze zur Validierung eines Algorithmus, die Ausgangsdaten des erfindungsgemäßen Verfahrens umfassen oder in Abhängigkeit von diesen ermittelt werden, können nicht nur im Rahmen eines überwachten Lernens genutzt werden, sondern auch im Rahmen eines teilüberwachtes Lernens, eines bestärkenden Lernens, eines aktiven Lernens und/oder eines unüberwachten Lernens.

Bei den Bilddaten kann es sich um zweidimensionale oder dreidimensionale Bilddaten handeln. So können durch eine Vielzahl medizinischer Bildgebungsverfahren Rohdaten erfasst werden, aus denen dreidimensionale Bilddaten rekonstruierbar sind, die durch das erfindungsgemäße Verfahren verarbeitet werden können. Unter Rohdaten werden insbesondere Daten einer medizinischen Bildgebungseinrichtung verstanden, die zur Bildgebung weiterverarbeitet werden müssen, insbesondere um dreidimensionale Bilddaten zur Verfügung zu stellen. So werden beispielsweise im Rahmen einer Computertomographie mehrere Projektionsbilder als Rohdaten aufgenommen, die durch eine Radom-Transformation bzw. eine Näherung hierfür, beispielsweise eine gefilterte Rückprojektion, in dreidimensionale Bilddaten transformiert werden können. Auch bei einer Einzelphotonenemissionstomographie bzw. bei einer Positronenemissionstomographie kann eine Rekonstruktion von dreidimensionalen Bilddaten aus Rohdaten auf diese Weise erfolgen. Bei der Bildgebung durch eine Magnetresonanzeinrichtung wird typischerweise für wenigstens eine Raumrichtung eine Phasenkodierung verwendet. Phasenkodierte Rohdaten können durch eine Fourier-Transformation in Bilddaten umgesetzt werden.

Die Eingangsdaten können auch mehrere anatomische Bereiche des Untersuchungsobjekts betreffen, von denen das Verarbeitungsergebnis des zu trainierenden bzw. zu validierenden Algorithmus abhängt. Ergänzend oder alternativ können sie mehrere weitere anatomische Bereiche betreffen, für die die Abbildung durch eine entsprechende Veränderung der Bilddaten bzw. Rohdaten verändert werden soll. Die Eingangsdaten können zusätzlich auch anatomische Bereiche des Untersuchungsobjekts betreffen, die weder bezüglich des zu trainierenden bzw. zu validierenden Algorithmus relevant sind, noch verändert werden sollen.

Die Eingangsdaten können über eine Eingangsschnittstelle empfangen werden und die Ausgangsdaten können über eine Ausgangsschnittstelle ausgegeben werden. Die Erzeugung der Ausgangsdaten kann durch eine Recheneinrichtung erfolgen. Da diese zur Bereitstellung der Ausgangsdaten dient, kann sie auch als Bereitstellungseinrichtung bezeichnet werden. Die Recheneinrichtung kann beispielsweise als entsprechend programmierte Datenverarbeitungseinrichtung, beispielsweise als Mikroprozessor, Microcontroller, FPGA oder Ähnliches implementiert sein.

Die Ausgangsdaten können insbesondere zum Training eines trainierten Algorithmus dienen, der insbesondere kognitive Funktionen nachahmen soll, die Menschen typischerweise mit dem menschlichen Geist assoziieren. Insbesondere kann die trainierte Funktion anhand der Trainingsdaten fähig sein, sich auf geänderte Umstände einzustellen bzw. Muster zu erkennen und zu extrapolieren.

Allgemein können Parameter der trainierten Funktion durch ein entsprechendes Training vorgegeben bzw. angepasst werden. Bezüglich des Trainings wird auch von einem Lernen gesprochen. Hierbei kann insbesondere ein überwachtes Lernen, ein teilüberwachtes Lernen, ein unüberwachtes Lernen, ein bestärkendes Lernen und/oder ein aktives Lernen verwendet werden. Parameter der trainierten Funktion können insbesondere iterativ im Rahmen von mehreren Lernschritten angepasst werden.

Der trainierte Algorithmus kann ein neuronales Netz, eine Supportvektormaschine, einen Entscheidungsbaum und/oder ein Bayes'sches Netz umfassen. Alternativ oder ergänzend kann der trainierte Algorithmus auch auf einem k-Means-Algorithmus, auf Q-Learning, einem genetischen Algorithmus und/oder auf Assoziationsregeln basieren. Ein neuronales Netz kann insbesondere ein Deep-Neural-Network, ein Convolutional-Neural-Network oder ein Convolutional-Deep-Neural-Network sein. Bei dem neuronalen Netz kann es sich ergänzend oder alternativ um ein Adversarial Network, ein Deep-Adversarial-Network und/oder ein Generative-Adversarial-Network handeln.

Die Bilddaten oder die Rohdaten können derart modifiziert werden, dass die Abbildung des Weiteren anatomischen Bereichs, nämlich wenigstens eines Zahnes, bzw. eines Teilbereichs davon, oder wenigstens eines Auges, bzw. eines Teilbereichs davon, oder einer Haut, bzw. eines Teilbereichs davon, oder einer subkutanen Fettschicht, bzw. eines Teilbereichs davon, des Untersuchungsobjekts, verändert, insbesondere verfremdet, wird. Im Rahmen der Entwicklung des erfindungsgemäßen Verfahrens wurde festgestellt, dass eine Veränderung bzw. Verfremdung der genannten weiteren anatomischen Bereiche besonders relevant ist, wenn eine Identifikation des Untersuchungsobjekts anhand der Ausgangsdaten verhindert oder zumindest erschwert werden soll. Bereiche der Haut bzw. von subkutanen Fettschichten können es, wenn sie nicht verändert werden, insbesondere ermöglichen, eine Gesichts- bzw. Körperform der Person näherungsweise fotorealistisch abzubilden, so dass durch eine Veränderung in diesen Bereichen beispielsweise eine Identifikation des Untersuchungsobjekts anhand von fotographischen Aufnahmen erschwert bzw. unmöglich gemacht wird. Auch der Augenbereich kann für eine solche Identifikation besonders relevant sein. Es ist prinzipiell auch bekannt, Personen anhand ihres Gebisses zu identifizieren, so dass es auch vorteilhaft ist, den Bereich der Zähne zu verändern.

In einem nicht vom beanspruchten Gegenstand abgedeckten Beispiel können die Rohdaten verändert werden, indem aus den Rohdaten durch einen Rekonstruktionsalgorithmus ein Bilddatensatz oder mehrere Bilddatensätze erzeugt werden, wobei der Bilddatensatz oder wenigstens einer der Bilddatensätze durch einen Modifikationsalgorithmus verändert wird, wonach der Bilddatensatz oder die Bilddatensätze durch einen Abbildungsalgorithmus verarbeitet werden, um modifizierte Rohdaten als Ausgangsdaten zu erzeugen. Der Bilddatensatz kann insbesondere dreidimensionale Bilddaten beschreiben bzw. mehrere Bilddatensätze können einzelne Schichten von dreidimensionalen Bilddaten beschreiben. Ein entsprechender Bilddatensatz bzw. entsprechende Bilddatensätze können beispielsweise für Computertomographiedaten, Einzelphotonenemissionstomographiedaten oder Positronenemissionstomographiedaten durch einen Rekonstruktionsalgorithmus gewonnen werden, der zumindest näherungsweise eine Radon-Transformation durchführt. Im einfachsten Fall kann der Rekonstruktionsalgorithmus eine gefilterte Rückprojektion sein. Vorzugsweise wird jedoch ein iteratives Rekonstruktionsverfahren genutzt. Bei einer Magnetresonanztomographie kann, wie obig erläutert, eine Fourier-Transformation genutzt werden, um phasenkodierte Rohdaten in Ortsraumintensitäten umzurechnen.

Da die Bilddatensätze somit insbesondere Daten zu Ortsraumkoordinaten beschreiben, kann der weitere anatomische Bereich dort leicht erkannt, beispielsweise automatisiert segmentiert, und verändert werden. Hierbei kann der Modifikationsalgorithmus einen Segmentieralgorithmus zur Segmentierung des Weiteren anatomischen Bereichs und einen Veränderungsalgorithmus zur Veränderung des entsprechenden Segments umfassen. Alternativ kann der Modifikationsalgorithmus jedoch unmittelbar eine Veränderung des Bilddatensatzes oder der Bilddatensätze derart durchführen, dass der weitere anatomische Bereich verändert wird. Dies kann beispielsweise der Fall sein, wenn ein trainierter Algorithmus als Modifikationsalgorithmus verwendet wird, der beispielsweise anhand von Trainingsdaten trainiert sein kann, die entsprechende Bilddatensätze und entsprechend veränderte Bilddatensätze umfassen. Es ist somit nicht notwendig erforderlich, dass eine explizite Segmentierung des Weiteren anatomischen Bereichs erfolgt.

Der Abbildungsalgorithmus kann eine Abbildung eines durch den Bilddatensatz bzw. durch die Bilddatensätze beschriebenen Objekts simulieren. Als einfaches Beispiel kann beispielsweise eine Vorwärtsprojektion des Bilddatensatzes bzw. der Bilddatensätze erfolgen, es ist jedoch auch möglich, Eigenschaften einer simulierten Bildgebungseinrichtung zu berücksichtigen. Im Falle einer Magnetresonanzbildgebung kann als Abbildungsalgorithmus z.B. eine Fourier-Transformation, also insbesondere eine Transformation von Ortsraumintensitäten in einen Frequenzraum, um eine Phasenkodierung zu simulieren, verwendet werden.

Die Veränderung des Bilddatensatzes bzw. der Bilddatensätze kann insbesondere dadurch erfolgen, dass Kontrastwerte der Bilddaten, beispielsweise Hounsfield-Units bei einer Computertomographie, auf Werte von benachbarten Pixeln bzw. Bereichen außerhalb des Weiteren anatomischen Bereiches, beispielsweise eines Bereichs, in dem Luft abgebildet wird, gesetzt werden. Um einerseits eine Identifikation des Untersuchungsobjekts weiter zu erschweren und andererseits Kontrastsprünge zu vermeiden, ist es hierbei möglich, dass zumindest in Teilen des Weiteren anatomischen Bereichs kontinuierliche Verläufe eines Kontrastwertes oder eines anderen Bildpunktwertes erzeugt werden, beispielsweise durch lineare oder anderweitige Interpolation zwischen zwei Werten. Beispielsweise können zumindest einige Werte im weiteren anatomischen Bereich dadurch generiert werden, dass zwischen dem Wert eines anderen Bildpunkts im weiteren anatomischen Bereich und einem konstanten Wert oder einem Wert außerhalb des Weiteren anatomischen Bereichs interpoliert wird.

In dem erfindungsgemäßen computerimplementierten Verfahren werden die Rohdaten verändert, indem aus den Rohdaten durch einen Rekonstruktionsalgorithmus wenigstens ein Bilddatensatz erzeugt wird, wobei der weitere anatomische Bereich in dem Bilddatensatz segmentiert wird und für jeden Bilddatensatz ein synthetischer Bilddatensatz, der ausschließlich den wenigstens einen weiteren anatomischen Bereich abbildet, generiert wird, wobei der wenigstens eine synthetische Bilddatensatz durch einen Abbildungsalgorithmus verarbeitet wird, um synthetische Rohdaten zu erzeugen, wobei die Ausgangsdaten erzeugt werden, indem die synthetischen Rohdaten von den Rohdaten subtrahiert werden. Mögliche Rekonstruktionsalgorithmen und Abbildungsalgorithmen wurden bereits obig erläutert.

Durch das beschriebene Vorgehen kann insbesondere eine Abbildung ausschließlich des wenigstens einen weiteren anatomischen Bereichs simuliert werden. Insbesondere kann eine simulierte Abbildung ausschließlich jener Bereiche bzw. Merkmale erfolgen, die eine Identifikation des Untersuchungsobjekts ermöglichen. Wird diese Abbildung, also die synthetischen Rohdaten, von den Rohdaten subtrahiert, werden somit aus den Rohdaten die identifizierten Merkmale entfernt.

Zur Modifikation des Weiteren anatomischen Bereichs bzw. zur ausschließlichen Abbildung des Weiteren anatomischen Bereichs wird dieser in dem wenigstens einen Bilddatensatz segmentiert. Eine entsprechende Segmentierung kann auch erfolgen, wenn unmittelbar Bilddaten als Eingangsdaten empfangen werden, um Segmente der Bilddaten zu verändern. Eine Segmentierung kann durch an sich bekannte Segmentierungsverfahren erfolgen. Beispielsweise können Kontrastsprünge zur Segmentierung ausgewertet werden oder Bereiche, in denen die Bilddaten bzw. der wenigstens eine Bilddatensatz einen spezifische Wertebereich aufweisen. Beispielsweise kann für Computertomographiedaten ein gewisser Wertebereich der Hounsfield-Skala oder eines anderen Maßes für den Schwächungskoeffizienten gewählt werden, der mit einer bestimmten Gewebeart, beispielsweise mit Haut oder Fettgewebe, korreliert, um entsprechende Bereiche zu segmentieren.

Besonders bevorzugt wird der weitere anatomische Bereich in dem wenigstens einen Bilddatensatz jedoch durch einen Segmentierungsalgorithmus segmentiert, der durch ein Verfahren des Maschinenlernens trainiert ist. Das Verfahren des Maschinenlernens kann insbesondere nicht Teil des computerimplementierten Verfahrens sein, sondern ein vorgelagerter Schritt. Der Segmentierungsalgorithmus kann mehrere freie Parameter aufweisen, die im Verfahren des Maschinenlernens ermittelt werden. Es kann insbesondere ein überwachtes Lernen genutzt werden, beispielsweise indem Trainingsdatensätze zur Verfügung gestellt werden, in denen eine entsprechende Segmentierung manuell oder durch einen anderen Algorithmus bereits durchgeführt wurde. Alternativ können jedoch auch die anderen bereits diskutierten Lernverfahren verwendet werden. Vorzugsweise wird als Segmentierungsalgorithmus ein neuronales Netz trainiert, wobei auch die anderen Ausgestaltungen eines trainierten Algorithmus, die obig erläutert wurden, möglich sind. Die Ausgangsdaten können erzeugt werden, indem ein Erzeugungsalgorithmus, der durch ein Verfahren des Maschinenlernens trainiert ist, auf die die Rohdaten angewandt wird. Das Maschinenlernen selbst kann insbesondere nicht Teil des Verfahrens sein, sondern vor Beginn des Verfahrens in einem vorbereiteten Schritt durchgeführt werden. Insbesondere kann die gesamte Datenverarbeitung in dem erfindungsgemäßen Verfahren durch den Erzeugungsalgorithmus erfolgen. Der trainierte Erzeugungsalgorithmus kann die Bild- bzw. Rohdaten als Eingangsdaten nutzen und die Ausgangsdaten unmittelbar ausgeben. Es können die bereits vorangehenden genannten Verfahren des Maschinenlernens zum Training des Erzeugungsalgorithmus genutzt werden. Der Erzeugungsalgorithmus kann beispielsweise ein neuronales Netz sein, jedoch auch wie bereits vorangehend erläutert ein anderer trainierter bzw. trainierbarer Algorithmus, dessen Parameter durch Maschinenlernen ermittelt werden.

Als der Segmentierungsalgorithmus und/oder als der Erzeugungsalgorithmus kann ein Algorithmus verwendet werden, der unter Verwendung von Trainingsdatensätzen trainiert ist, die jeweils einerseits Rohdaten oder wenigstens einen Bilddatensatz und andererseits eine Segmentierungsinformation umfassen, wobei die Segmentierungsinformation jeweils eine Segmentierung des anatomischen Bereichs und/oder des Weiteren anatomischen Bereichs in den in dem Bilddatensatz oder in wenigstens einem anhand der Rohdaten vorgegebenen Bilddatensatz beschreibt. Um ein Segmentieren des anatomischen Bereichs bzw. des Weiteren anatomischen Bereichs zu erlernen, kann ein überwachtes Lernen genutzt werden, bei dem insbesondere ein Unterschied zwischen einer durch den Segmentierungsalgorithmus generierten Segmentierungen des anatomischen Bereichs bzw. des Weiteren anatomischen Bereichs und der durch die Segmentierungsinformation vorgegebenen jeweiligen Segmentierung minimiert wird. Beispielsweise kann hierbei eine Kostenfunktion definiert werden, deren Wert von dem Unterschied der Segmentierungen abhängt. Diese kann durch ein iteratives Verfahren bzw. durch eine Back-Propagation of Error minimiert werden.

Ein Erzeugungsalgorithmus zur Erzeugung der Ausgangsdaten aus den Eingangsdaten kann beispielsweise trainiert werden, indem sowohl in den Eingangsdaten bzw. in wenigstens einem hieraus erzeugten Bilddatensatz als auch in den Ausgangsdaten bzw. wenigstens einem hieraus erzeugten Ausgangsbilddatensatz der anatomische Bereich und/oder der weitere anatomische Bereich anhand der Segmentierungsinformation segmentiert werden. Das Training kann dann erfolgen, indem ein Maß für die Ähnlichkeit der segmentierten anatomischen Bereiche maximiert und/oder ein Maß für die Ähnlichkeit der segmentierten weiteren anatomischen Bereiche minimiert wird. Der Algorithmus kann somit derart trainiert werden, dass die Abbildung des anatomischen Bereichs zwischen den Eingangs- und Ausgangsdaten möglichst ähnlich bleibt und/oder dass die Abbildung des Weiteren anatomischen Bereichs sich zwischen den Eingangsdaten und den Ausgangsdaten möglichst deutlich unterscheidet. Statt die Ähnlichkeit zwischen den Abbildungen der anatomischen Bereiche in den Eingangs- und Ausgangsdaten zu maximieren, kann stattdessen als Randbedingung des Trainings gefordert werden, dass der anatomische Bereich durch Anwendung des Algorithmus unverändert bleibt.

Als der Segmentierungsalgorithmus und/oder als der Erzeugungsalgorithmus kann ein Algorithmus verwendet werden, der unter Verwendung von Trainingsdatensätzen trainiert ist, die jeweils einerseits Rohdaten und andererseits veränderte Rohdaten oder wenigstens einen veränderten Bilddatensatz umfassen, die oder der derart verändert sind oder ist, dass die Abbildung des Weiteren anatomischen Bereichs durch die veränderten Bilddaten ausgehend von den durch die veränderten Rohdaten ausgehend von den Rohdaten oder durch den veränderten Bilddatensatz ausgehend von einem jeweiligen aus den Rohdaten auf vorgegebene Weise ermittelten Bilddatensatz wie gewünscht verändert, insbesondere verfremdet, ist. Die veränderten Rohdaten oder der wenigstens eine veränderte Bilddatensatz können für den jeweiligen Trainingsdatensatz dadurch erzeugt werden, dass beispielsweise eine manuelle Veränderung durch einen menschlichen Experten oder eine Veränderung durch einen anderen Algorithmus erfolgt.

Der Erzeugungsalgorithmus kann beispielsweise dadurch trainiert werden, dass ein Maß für eine Ähnlichkeit zwischen Ausgangsdaten, die durch den Erzeugungsalgorithmus aus Eingangsdaten, die die Bilddaten bzw. Rohdaten eines der Trainingsdatensätze sind, und den veränderten Bilddaten bzw. den veränderten Rohdaten des gleichen Trainingsdatensatzes im Rahmen des Maschinenlernens maximiert wird. Umfasst der Trainingsdatensatz wenigstens einen veränderten Bilddatensatz, so kann im Rahmen des Trainings ein Maß für die Ähnlichkeit eines aus den Ausgangsdaten des Erzeugungsalgorithmus erzeugten Bilddatensatzes und des veränderten Bilddatensatzes des gleichen Trainingsdatensatzes maximiert werden. Allgemein ausgedrückt kann der Erzeugungsalgorithmus so trainiert werden, dass er für als Teil eines Trainingsdatensatzes vorgegebene Eingangsdaten Ausgangsdaten erzeugt werden, die durch den Trainingsdatensatz vorgegebenen Solldaten möglichst gut entsprechen.

Ein Segmentierungsalgorithmus kann mit Hilfe der veränderten Bilddaten bzw. der veränderten Rohdaten bzw. des wenigstens einen veränderten Bilddatensatzes trainiert werden, indem Segmente erkannt werden, in denen sich d die veränderten Rohdaten besonders stark von den Rohdaten und der veränderten Bilddatensatz besonders stark von einem aus den Rohdaten erzeugten Bilddatensatz unterscheidet und der Segmentierungsalgorithmus kann derart trainiert werden, dass in den Bilddaten bzw. wenigstens einem aus den Rohdaten erzeugten Bilddatensatz jene Bereiche segmentiert werden, in denen dies der Fall ist. Ein Training zum Segmentieren bestimmter Bereiche wurde bereits vorangehend diskutiert.

Im erfindungsgemäßen Verfahren können die Eingangsdaten Computertomographiedaten oder Magnetresonanztomographiedaten oder Einzelphotonenemissionstomographiedaten oder Positronenemissionstomographiedaten sein. Die genannten Daten können an sich zunächst als Rohdaten bereitgestellt werden, aus denen durch einen Rekonstruktionsalgorithmus, wie bereits erläutert, dreidimensionale Bilddaten generiert werden können. Das erfindungsgemäße Verfahren kann die Rohdaten oder die Bilddaten verarbeiten, wobei Bilddaten entweder als dreidimensionaler Bilddatensatz verarbeitet werden können oder als einzelne Schichten.

Wie bereits obig erläutert, kann im Rahmen des erfindungsgemäßen Verfahrens ein trainierter Segmentierungs- oder Erzeugungsalgorithmus verwendet werden. Die Erfindung betrifft somit auch ein Verfahren zum Trainieren des Segmentierungsalgorithmus und/oder des Erzeugungsalgorithmus. Möglichkeiten zum Training dieser Algorithmen wurden bereits vorangehend diskutiert.

Ergänzend betrifft die Erfindung auch einen trainierten Segmentierungsalgorithmus und/oder einen trainierten Erzeugungsalgorithmus bzw. Parameterdatensätze, die einen vorgegebenen Algorithmus zur Bereitstellung des Segmentierungs- und/oder des Erzeugungsalgorithmus parametrisieren bzw. einen computerlesbaren Datenträger, der den Segmentierungsalgorithmus und/oder den Erzeugungsalgorithmus und/oder die Parameterdatensätze speichert. Der Segmentierungsalgorithmus bzw. der Erzeugungsalgorithmus bzw. der Parameterdatensatz und somit auch der Datenträger können insbesondere als Erzeugnis der erläuterten Trainingsverfahren bereitgestellt werden.

Ein weiteres Beispiel betrifft zudem ein computerimplementiertes Verfahren zur Bereitstellung eines trainierten Algorithmus durch ein Verfahren des Maschinenlernens umfassend die Schritte:

- Empfangen von Trainingsdaten, die Ausgangsdaten des erfindungsgemäßen Verfahrens zur Bereitstellung von Ausgangsdaten sind oder umfassen oder die auf diesen Ausgangsdaten basieren,
- Trainieren des Algorithmus auf Basis der Trainingsdaten, und
- Bereitstellen des trainierten Algorithmus.

Das Empfangen der Trainingsdaten kann über eine entsprechende Schnittstelle erfolgen. Erfolgt ein überwachtes Training derart, dass ein jeweiliger Trainingsdatensatz Eingangsdaten und Sollausgangsdaten für den Algorithmus umfasst, können die Eingangsdaten über eine Eingangsdatenschnittstelle empfangen werden und die Sollausgangsdaten über eine Sollausgangsdatenschnittstelle. Das Trainieren des Algorithmus kann durch eine Trainingseinrichtung, insbesondere eine Datenverarbeitungseinrichtung, erfolgen. Möglichkeiten zur Ausgestaltung von Datenverarbeitungseinrichtungen wurden bereits vorangehend erläutert.

Verschiedene Arten von Algorithmen, die trainiert werden können, sowie verschiedene Verfahren zum Trainieren eines Algorithmus durch Maschinenlernen wurden bereits vorangehend diskutiert.

Daneben betrifft ein weiteres Beispiel einen trainierten Algorithmus, der durch das vorangehend genannte Verfahren zur Bereitstellung des trainierten Algorithmus trainiert wurde. Der Algorithmus kann als vollständiger Algorithmus oder als Parameterdatensatz, der einen vorgegebenen Algorithmus parametrisiert, vorgegeben werden. Ein weiteres Beispiel betrifft zudem einen computerlesbaren Datenträger, der den trainierten Algorithmus bzw. einen einen vorgegebenen Algorithmus parametrisierten Parametersatz speichert.

Ein weiteres Beispiel betrifft zudem ein computerimplementiertes Verfahren zur Bereitstellung eines Verarbeitungsergebnisses, das die folgenden Schritte umfasst:

- Empfangen von Eingangsdaten,
- Ermitteln des Verarbeitungsergebnisses durch Anwenden eines trainierten Algorithmus auf die Eingangsdaten, wobei der trainierte Algorithmus auf Trainingsdaten basiert, die Ausgangsdaten des erfindungsgemäßen Verfahrens zur Bereitstellung von Ausgangsdaten sind oder umfassen oder auf diesen Ausgangsdaten basieren, und/oder durch das erfindungsgemäße Verfahren zur Bereitstellung eines trainierten Algorithmus trainiert ist, und
- Bereitstellen des Verarbeitungsergebnisses.

Die Eingangsdaten können über eine Eingangsschnittstelle empfangen werden und die Ausgangsdaten können über eine Ausgangsschnittstelle bereitgestellt werden.

Die Erfindung betrifft zudem eine Bereitstellung- und/oder Trainingseinrichtung, die zur Durchführung des erfindungsgemäßen Verfahrens zur Bereitstellung von Ausgangsdaten und/oder zur Durchführung des erfindungsgemäßen Verfahrens zum Training des Segmentieralgorithmus und/oder des Erzeugungsalgorithmus und/oder zur Durchführung des erfindungsgemäßen Verfahrens zur Bereitstellung eines trainierten Algorithmus und/oder zur Durchführung des erfindungsgemäßen Verfahrens zur Bereitstellung von Ausgangsdaten eingerichtet ist. Insbesondere kann die Bereitstellungs- und/oder Trainingseinrichtung die bereits zu den jeweiligen Verfahren erläuterten Schnittstellen implementieren und eine Datenverarbeitungseinrichtung aufweisen, die zur Durchführung der zum jeweiligen Verfahren bereits erläuterten Datenverarbeitung eingerichtet ist. Die Datenverarbeitung kann beispielsweise auf einem entsprechend programmierten Prozessor, beispielsweise einem Mikroprozessor, Microcontroller, FPGA, DSP oder Ähnlichem, oder auch verteilt auf einer Vielzahl von Prozessoren, beispielsweise auch in einer Cloud, erfolgen.

Die zu den verschiedenen Verfahren erläuterten Merkmale können mit den genannten Vorteilen auf die erfindungsgemäße Bereitstellungs- und/oder Trainingseinrichtung übertragen werden und umgekehrt.

Die Erfindung betrifft zudem ein Computerprogramm für eine Datenverarbeitungseinrichtung mit Programmanweisungen, die bei einer Durchführung auf einer Verarbeitungseinrichtung ein erfindungsgemäßes Verfahren zur Bereitstellung von Ausgangsdaten und/oder ein Verfahren zum Training des Segmentierungsalgorithmus und/oder des Erzeugungsalgorithmus und/oder ein Verfahren zur Bereitstellung eines trainierten Algorithmus und/oder zur Bereitstellung von Ausgangsdaten durchführen.

Zudem betrifft die Erfindung einen computerlesbaren Datenträger, der ein erfindungsgemäßes Computerprogramm umfasst.

Weitere Vorteile und Einzelheiten der Erfindung ergeben sich aus den folgenden Ausführungsbeispielen sowie den zugehörigen Zeichnungen. Hierbei zeigen schematisch:

Fig. 1     Datenstrukturen und Ausführungsbeispiele erfindungsgemäßer Bereitstellungs- und Trainingseinrichtungen, die im Rahmen von Ausführungsbeispielen von erfindungsgemäßen Verfahren genutzt werden,

Fig. 2     ein Ablaufdiagramm zum Zusammenwirken von Ausführungsbeispielen verschiedener erfindungsgemäßer Verfahren,

Fig. 4+5   verschiedene Ausführungsbeispiele des erfindungsgemäßen Verfahrens zur Bereitstellung von Ausgangsdaten,

Fig. 6     ein Ausführungsbeispiel zum Training eines Segmentieralgorithmus, der im Rahmen eines Ausführungsbeispiels des erfindungsgemäßen Verfahrens zur Bereitstellung von Ausgangsdaten nutzbar ist,

Fig. 7    ein Ausführungsbeispiel zum Training eines Erzeugungsalgorithmus, der in einem Ausführungsbeispiel des erfindungsgemäßen Verfahrens zur Bereitstellung von Ausgangsdaten nutzbar ist, und

Fig. 8+9    beispielhafte Strukturen von trainierten Algorithmen, die in den erfindungsgemäßen Verfahren nutzbar sind.

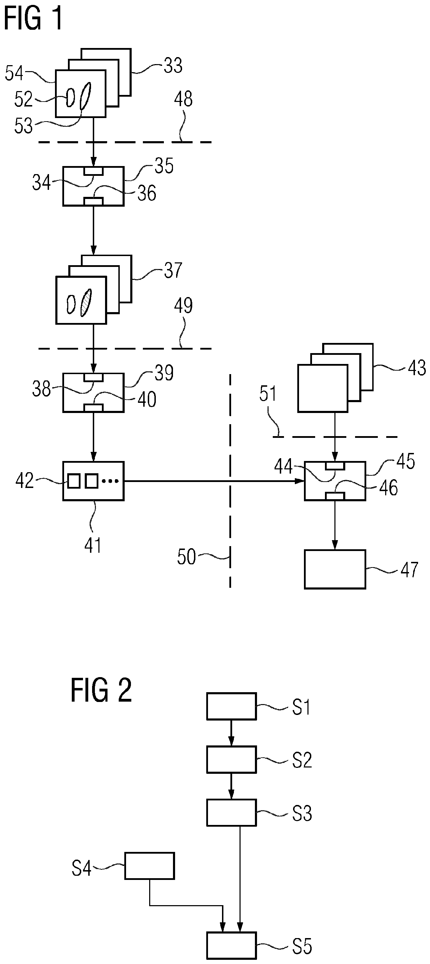

Fig. 1 zeigt Einrichtungen und Datenstrukturen, die im Rahmen des Trainings und der Anwendung eines Algorithmus zur Verarbeitung von medizinischen Bilddaten verwendet werden, und Fig. 2 zeigt ein zugehöriges Ablaufdiagramm.

Der gezeigte Ablauf umfasst mehrere Verfahren, die auch separat voneinander genutzt werden können bzw. durch unterschiedliche Anwender und/oder auf unterschiedlichen Systemen durchgeführt werden können. Hierbei betreffen der Abschnitt des Diagramms in Fig. 1 bis zur Linie 48 bzw. Schritt S1 die Bereitstellung von Eingangsdaten, der Abschnitt des Diagramms in Fig. 1 zwischen den Linien 48 und 49 bzw. Schritt S2 ein Verfahren zur Bereitstellung von Ausgangsdaten, die zum Training bzw. zur Validierung eines Algorithmus dienen, der Abschnitt des Diagramms in Fig. 1 zwischen den Linien 49 und 50 bzw. Schritt S3 ein Verfahren zur Bereitstellung eines trainierten Algorithmus durch ein Verfahren des Maschinenlernsens, der Abschnitt des Diagramms in Fig. 1 vor der Linie 51 bzw. der Schritt S4 die Bereitstellung von weiteren Eingangsdaten und der Abschnitt des Diagramms in Fig. 1 nach den Linien 50 und 51 bzw. der Schritt S5 ein Verfahren zur Bereitstellung von Ausgangsdaten. Die einzelnen Schritte in Fig. 2 bzw. die Abschnitte des Diagramms in Fig. 1 werden im Folgenden zusammenhängend erläutert, um ein besseres Verständnis des Gesamtsystems zu ermöglichen. Prinzipiell können diese Schritte bzw. Abschnitte jedoch unabhängig voneinander durch verschiedene Nutzer, auf verschiedenen Systemen und ohne einen unmittelbaren zeitlichen Zusammenhang genutzt werden.

In Schritt S1 werden zunächst Eingangsdaten 33 erfasst, die Rohdaten eines medizinischen Bildgebungsverfahrens sind. Die Eingangsdaten 33 können beispielsweise Computertomographiedaten, Magnetresonanztomographiedaten, Einzelphotonenemissionstomographiedaten oder Positronenemissionstomographiedaten sein. Die Erfassung entsprechender Messdaten ist im Stand der Technik wohlbekannt und soll daher nicht detailliert erläutert werden.

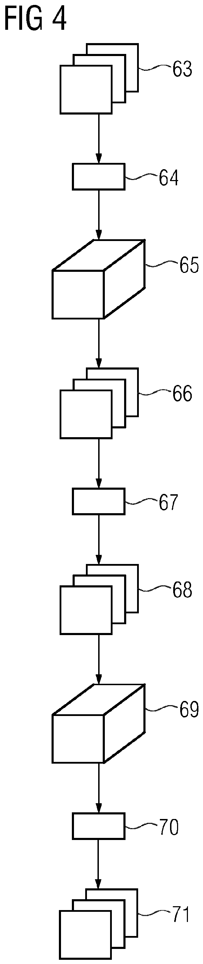

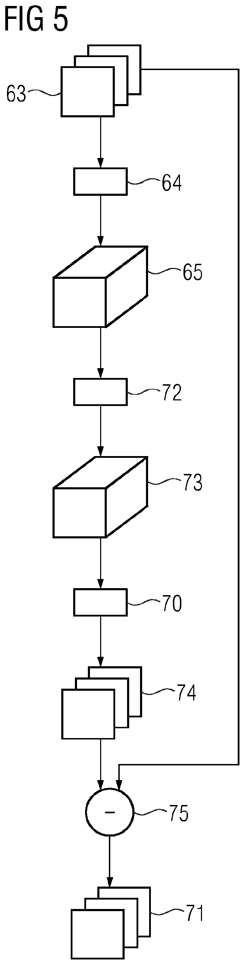

Die Erfassung der Eingangsdaten kann prinzipiell explizit zu dem Zweck erfolgen, einen Algorithmus zu trainieren bzw. zu validieren. Besonders bevorzugt sind die Eingangsdaten jedoch bereits vorangehend für andere Zwecke erfasst worden und können beispielsweise einer Datenbank entnommen werden. Zur klareren Darstellung sind in Fig. 1 beispielhaft Bilddaten 54 als Eingangsdaten dargestellt. Eine Nutzung von Rohdaten als Eingangsdaten wird später noch mit Bezug auf Fig. 4 und 5 diskutiert werden.

In Schritt S2 soll eine Anonymisierung der Eingangsdaten 33 erfolgen. Hierbei soll neben üblichen Anonymisierungsschritten, also beispielsweise dem Verwerfen von Patientennamen, Geburtsdaten und Ähnlichem, auch eine Modifikation der Eingangsdaten 33 derart erfolgen, dass eine Identifizierung des Untersuchungsobjekts, an dem die Eingangsdaten 33 erfasst wurden, verhindert oder zumindest deutlich erschwert wird.

Hierzu werden die Eingangsdaten 33 über eine Eingangsschnittstelle 34 einer Bereitstellungseinrichtung 35 empfangen. Die Bereitstellungseinrichtung 35 verarbeitet die Eingangsdaten 33, um über eine Ausgangsschnittstelle 36 Ausgangsdaten 37 bereitzustellen. Hierbei sollen die Eingangsdaten 33 derart verändert werden, dass ein Training bzw. eine Validierung des Algorithmus weiterhin uneingeschränkt möglich ist, jedoch Merkmale, die eine Identifizierung des Untersuchungsobjekts ermöglichen, verändert werden. Soll der Algorithmus beispielsweise innere Organe oder Teilbereiche von diesen segmentieren oder klassifizieren oder Ähnliches, können beispielsweise Bereiche der Eingangsdaten 33 modifiziert werden, die Haut, subkutanes Fettgewebe, Augen und/oder Zähne des Untersuchungsobjekts zeigen.

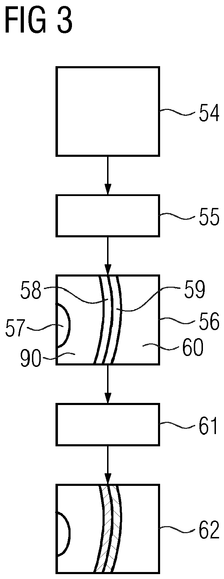

Allgemein können die Eingangsdaten 33 wenigstens einen anatomischen Bereich 52 abbilden, von dem das Verarbeitungsergebnis des zu trainierenden oder zu validierenden Algorithmus 41 abhängt. Durch die Bereitstellungseinrichtung 35, die die Ausgangsdaten 37 bereitstellt, werden die Bilddaten 54 bzw. die Rohdaten derart modifiziert, dass die Abbildung eines weiteren anatomischen Bereichs 53, von dem insbesondere der zu trainierende bzw. zu validierende Algorithmus unabhängig ist bzw. der insbesondere eine Identifizierung des Untersuchungsobjekts ermöglicht, verändert, insbesondere verfremdet, wird. Verschiedene Möglichkeiten für eine Veränderung der Eingangsdaten werden später noch mit Bezug auf die Figuren 3 bis 5 im Detail erläutert werden.

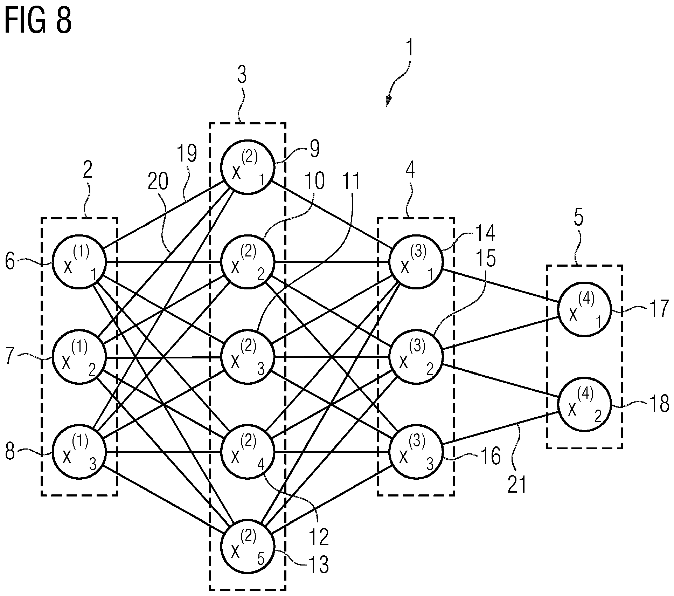

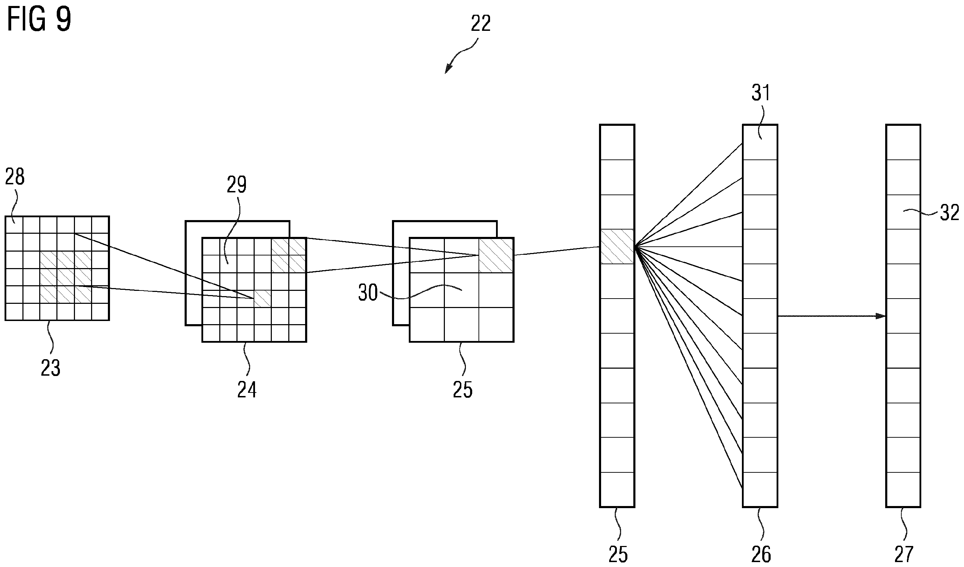

In Schritt S3 wird ein Algorithmus 41 durch ein Verfahren des Maschinenlernens in einer Trainingseinrichtung trainiert. Im Rahmen des Trainings können insbesondere Werte für Parameter 42 des Algorithmus 41 bestimmt werden. Beispielsweise kann der Algorithmus 41 ein neuronales Netz sein. Beispiele für neuronale Netze und für andere Algorithmen, die durch ein Verfahren des Maschinenlernens trainiert werden können, wurden bereits vorangehend genannt. Die prinzipielle Funktion von neuronalen Netzen und insbesondere von faltenden neuronalen Netzen wird später noch mit Bezug auf die Figuren 8 und 9 erläutert werden.

Zum Training des Algorithmus 41 werden Trainingsdaten, die wie erläutert anonymisiert wurden, nämlich die Ausgangsdaten 37, über eine Eingangsschnittstelle 38 der Trainingseinrichtung 38 empfangen. Der trainierte Algorithmus wird nach Abschluss des Trainings über die Ausgangsschnittstelle 40 bereitgestellt. Das Training kann beispielsweise ein überwachtes Lernen sein, bei dem der jeweilige Trainingsdatensatz neben Eingangsdaten für den Algorithmus 41 Sollausgangsdaten umfasst. Im Rahmen des Trainings können die Parameter 42 variiert werden, um eine Abweichung der Verarbeitungsergebnisse, die bei der Verarbeitung der Eingangsdaten eines Trainingsdatensatzes durch den Algorithmus 41 resultieren, von den Sollausgangsdaten zu minimieren. Dies kann beispielsweise durch eine sogenannte Fehlerrückführung erreicht werden. Entsprechende Ansätze zum Training eines Algorithmus 41 sind prinzipiell bekannt und sollen nicht detailliert erläutert werden.

Wesentlicher Unterschied zu üblichen Trainingsvorgängen ist, dass Trainingsdaten verwendet werden, bei denen, wie obig erläutert, die Abbildung wenigstens eines weiteren anatomischen Bereichs 53 verändert worden ist, um eine Identifizierung des Untersuchungsobjekts, von dem die Trainingsdaten stammen, zu verhindern oder zumindest zu erschweren.

In dem gezeigten Beispiel werden die gesamten Trainingsdaten über eine Eingangsschnittstelle 38 bereitgestellt. Falls ein jeweiliger Trainingsdatensatz Eingangsdaten und Sollausgangsdaten umfasst, können die Eingangsdaten und die Sollausgangsdaten über separate Schnittstellen bereitgestellt werden.

Sollausgangsdaten können auf beliebige Weise ermittelt werden. Prinzipiell wäre es möglich, die Sollausgangsdaten durch einen anderen Algorithmus zu ermitteln. Besonders bevorzugt sind die Sollausgangsdaten jedoch zumindest unter Mithilfe eines menschlichen Experten entstanden. Bei den Sollausgangsdaten und somit bei dem gewünschten Verarbeitungsergebnis des Algorithmus kann es sich beispielsweise um eine Segmentierung des anatomischen Bereichs bzw. von Teilbereichen von diesem bzw. um eine Klassifikation der entsprechenden Bereiche handeln. Beispielsweise könnte der Algorithmus 41 dazu dienen, potentielle Läsionen eines inneren Organs, beispielsweise einer Lunge, zu segmentieren und/oder zu klassifizieren.

Die Ermittlung der Sollausgangsdaten kann anhand der Eingangsdaten 33 erfolgen. Dies kann beispielsweise zweckmäßig sein, wenn die Eingangsdaten zu anderen Zwecken bereits erfasst und ausgewertet wurden, wobei als Teil dieser Auswertung die Sollausgangsdaten bereitgestellt werden. Falls die Sollausgangsdaten Bilddaten umfassen, beispielsweise wenn sie segmentierte Bilder darstellen, können diese ebenfalls mit dem obig erläuterten Vorgehen anonymisiert werden. Ergibt sich aus den Sollausgangsdaten keine Identifikation des Untersuchungsobjekts, können diese nach der Anonymisierung der Eingangsdaten 33 mit den resultierenden Ausgangsdaten 37 in jeweiligen Trainingsdatensätzen kombiniert werden.

Alternativ wäre es auch möglich, die Sollausgangsdaten auf Basis der bereits anonymisierten Ausgangsdaten 37 zu ermitteln. Dies kann beispielsweise vorteilhaft sein, wenn Daten aus einer Vielzahl von Datenquellen zu einem spezifischen Zweck ausgewertet werden sollen, um Sollausgangsdaten bereitzustellen. Die vorangehende Anonymisierung der Daten kann es beispielsweise ermöglichen, eine größere Gruppe von Experten zur Bereitstellung von Sollausgangsdaten heranzuziehen.

Alternativ zu einem überwachten Lernen könnte auch ein teilüberwachtes Lernen, ein verstärkendes Lernen, ein aktives Lernen oder ein unüberwachtes Lernen erfolgen. Auch bei diesen Lernvorgängen ist es vorteilhaft, anonymisierte Trainingsdaten zu nutzen.

In Schritt S4 werden weitere Eingangsdaten 43 erfasst, die anschließend durch den trainierten Algorithmus 41 verarbeitet werden sollen. Hierbei werden vorzugsweise die gleichen Bildgebungsmodalitäten genutzt, wie zur Erfassung der Eingangsdaten 33.

In Schritt S5 werden die weiteren Eingangsdaten 43 durch den trainierten Algorithmus 41 verarbeitet. Hierzu werden die weiteren Eingangsdaten 43 durch eine Eingangsschnittstelle 44 einer weiteren Bereitstellungseinrichtung 45 empfangen, wonach die weitere Bereitstellungseinrichtung 45 den trainierten Algorithmus 41 auf die Eingangsdaten 43 anwendet. Das resultierende Verarbeitungsergebnis 47 wird anschießend über die Ausgabeschnittstelle 46 bereitgestellt.

Die Bereitstellungseinrichtungen 35, 45 und die Trainingseinrichtung 39 sind in Fig. 1 als separate Einrichtungen dargestellt. Prinzipiell ist es auch möglich, mehrere oder alle dieser Einrichtungen zusammenzufassen. Eine Separierung zumindest der Bereitstellungseinrichtung 35 ist jedoch vorteilhaft, da erst nach der Verarbeitung durch die Bereitstellungseinrichtung 35 eine Anonymisierung der Eingangsdaten 33 erfolgt ist. Somit können die folgenden Verarbeitungsschritte unter Umständen mit geringeren Anforderungen bezüglich des Schutzes von personenbezogenen Daten durchgeführt werden, da die genutzten Daten anonymisiert sind.

Die Bereitstellungseinrichtungen 35, 45 bzw. die Trainingseinrichtung 49 können programmierbare Datenverarbeitungseinrichtungen sein, die durch ein jeweiliges entsprechendes Programm zur Durchführung des jeweiligen erläuterten Verfahrens konfiguriert sind. Ein solches Programm kann beispielsweise auf einem nicht dargestellten Datenträger bereitgestellt werden, jedoch auch über ein Netzwerk geladen werden oder Ähnliches. Die Bereitstellung des Algorithmus 41 bzw. von dessen Parametern 42 kann beispielsweise auf einem Datenträger oder anderweitig, beispielsweise über ein Netzwerk, erfolgen.

Die Ausgangsdaten 37 können alternativ auch zur Validierung des Algorithmus 41 verwendet werden. Beispielsweise können die Ausgangsdaten 37 als weitere Eingangsdaten 43 verwendet werden und das Verarbeitungsergebnis 47 kann mit einem Sollverarbeitungsergebnis verglichen werden.

Fig. 3 zeigt ein nicht vom beanspruchten Gegenstand abgedecktes Beispiel zur Umsetzung der Veränderung der Bilddaten 54 im Schritt S2. Aus Übersichtlichkeitsgründen werden im Beispiel zweidimensionale Bilddaten 54 verarbeitet, das Verfahren ist jedoch auch für dreidimensionale Bilddaten identisch durchführbar.

Die Bilddaten 54 werden zunächst durch einen Segmentierungsalgorithmus 55 segmentiert, um eine Segmentierungsinformation 56 zu ermitteln. Hierbei werden der anatomische Bereich 57, von dem der zu trainierende bzw. zu validierende Algorithmus abhängen soll, sowie zwei weitere anatomische Bereiche 58, 59, deren Abbildung verändert werden soll, segmentiert. Der weitere anatomische Bereich 59 kann beispielsweise der Haut und der weitere anatomische Bereich 58 einer subkutanen Fettschicht des Untersuchungsobjekts entsprechen. Durch Veränderung dieser weiteren anatomischen Bereiche 58, 59 kann die Wiedererkennung des Untersuchungsobjekts beispielsweise anhand von Fotographien des Gesichts oder Ähnlichem deutlich erschwert oder gar unmöglich gemacht werden.

Durch einen Modifikationsalgorithmus 61 werden anschließend die Bilddaten in den weiteren anatomischen Bereichen 58, 59 verändert, um modifizierte Bilddaten 62 bereitzustellen, die die Ausgangsdaten 37 oder einen Teil hiervon darstellen. Im einfachsten Fall können alle Bildpunkte in den weiteren anatomischen Bereichen 58, 59 auf einen festen Wert gesetzt werden. Beispielsweise kann ein Wert des Bereichs 60 genutzt werden, in dem beispielsweise Luft abgebildet wird.

In einigen Fällen kann es jedoch vorteilhaft sein, plötzliche Wertsprünge zu vermeiden, so dass in den weiteren anatomischen Bereichen 58 und/oder 59 beispielsweise ein kontinuierlicher Wertverlauf generiert werden kann, beispielsweise durch Interpolation zwischen den Bereichen 60 und 90.

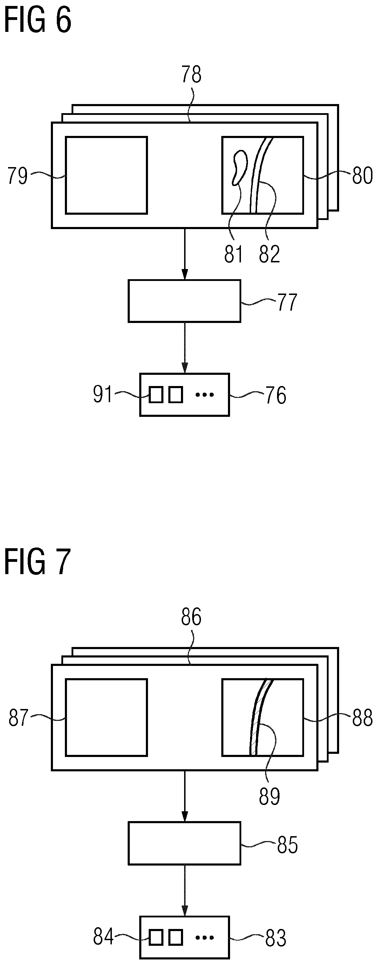

Als Segmentierungsalgorithmus 55 können an sich bekannte Segmentierungsalgorithmen genutzt werden, die zur Segmentierung beispielsweise Kontrastsprünge nutzen oder die bestimmte Wertebereiche von Bildpunktwerten segmentieren, also beispielsweise Bereiche segmentieren, in denen Bildpunkte mit einem gewissen Wert auf der Hounsfield-Skala liegen. Es kann jedoch auch vorteilhaft sein, den Segmentierungsalgorithmus 55 durch ein Verfahren des Maschinenlernens zu trainieren, wie später noch mit Bezug auf Fig. 6 erläutert werden wird.

Statt der Nutzung eines separaten Segmentierungsalgorithmus 55 und Modifikationsalgorithmus 61 könnte auch die gesamte Modifikation der Bilddaten 54 durch einen Erzeugungsalgorithmus erfolgen, der unmittelbar aus den Bilddaten 54 die modifizierten Bilddaten 62 und somit insbesondere aus den Eingangsdaten 33 unmittelbar die Ausgangsdaten 37 ermittelt. Ein solcher Algorithmus kann beispielsweise durch ein Verfahren des Maschinenlernens trainiert werden, wie später noch mit Bezug auf Fig. 7 erläutert werden wird.

Fig. 4 zeigt eine alternative Implementierung des Verfahrens zur Bereitstellung von Ausgangsdaten 37, wobei hierbei Rohdaten 63 eines medizinischen Bildgebungsverfahrens als Eingangsdaten 33 verwendet werden. Solche Rohdaten 63 können beispielsweise Projektionsbilder einer Computertomographie oder Magnetresonanzdaten mit einer Phasenkodierung sein.

Die Rohdaten 63 werden durch einen Rekonstruktionsalgorithmus 64 rekonstruiert, um einen dreidimensionalen Bilddatensatz 65 zu erzeugen. Entsprechende Rekonstruktionsalgorithmen sind im Stand der Technik wohlbekannt und sollen nicht detailliert erläutert werden.

Im gezeigten Beispiel wird der dreidimensionale Bilddatensatz 65 in mehrere zweidimensionale Bilddatensätze 66, beispielsweise in Schnittbilder, unterteilt. Diese werden anschließend durch einen Modifikationsalgorithmus 67 modifiziert, um modifizierte zweidimensionale Bilddatensätze 68 bereitzustellen, die anschließend wieder zu einem modifizierten dreidimensionalen Bilddatensatz 69 zusammengefügt werden können.

Die Modifikation erfolgt hierbei derart, dass ein anatomischer Bereich, von dem das Ergebnis des zu trainierenden bzw. zu validierenden Algorithmus abhängt, unverändert bleibt, während wenigstens ein weiterer anatomischer Bereich verändert, insbesondere verfremdet, wird. Möglichkeiten hierfür wurden bereits mit Bezug auf Fig. 3 diskutiert.

In einer alternativen nicht vom beanspruchten Gegenstand abgedeckten Ausführungsform wäre es auch möglich, unmittelbar den rekonstruierten dreidimensionalen Bilddatensatz 65 zu modifizieren, um zum modifizierten dreidimensionalen Bilddatensatz 69 zu gelangen.

Der modifizierte dreidimensionale Bilddatensatz 69 wird durch einen Abbildungsalgorithmus 70 verarbeitet, um modifizierte Rohdaten 71 als Ausgangsdaten 37 zu erzeugen. Der Abbildungsalgorithmus 70 kann eine Bildgebung eines durch den dreidimensionalen Bilddatensatz 69 abgebildeten Untersuchungsobjekts simulieren. Beispielsweise kann für eine Computertomographie im einfachsten Fall eine Vorwärtsprojektion genutzt werden, um die modifizierten Rohdaten 71 zu generieren. Für Magnetresonanzdaten kann beispielsweise für wenigstens eine Koordinate eine Fourier-Transformation erfolgen, um eine Phasenkodierung zu simulieren.

Fig. 5 zeigt einen alternativen Ansatz zur Bereitstellung von modifizierten Rohdaten 71 als Ausgangsdaten 37. Hierbei werden, wie bereits zur Fig. 4 erläutert wurde, zunächst die Rohdaten 63 durch einen Rekonstruktionsalgorithmus 64 verarbeitet, um einen dreidimensionalen Bilddatensatz 65 bereitzustellen. Durch einen Segmentierungsalgorithmus 72 wird der wenigstens eine weitere anatomische Bereich, für den eine Veränderung erfolgen soll, segmentiert und es wird ein synthetischer Bilddatensatz 73 generiert, der ausschließlich den wenigstens einen weiteren anatomischen Bereich abbildet.

Der synthetische Bilddatensatz 73 wird anschließend durch einen Abbildungsalgorithmus 70, der bereits zur Fig. 4 erläutert wurde, abgebildet, um eine Bildgebung zu simulieren. Hieraus resultieren synthetische Rohdaten 74. Durch eine Subtraktion 75 der synthetischen Rohdaten 74 von den Rohdaten 63 resultieren modifizierte Rohdaten 71 als Ausgangsdaten 37, in denen Merkmale, die in dem weiteren anatomischen Bereich abgebildet wurden, durch die Subtraktion 75 entfernt sind. Somit ist die Abbildung des wenigstens einen weiteren anatomischen Bereichs durch die Rohdaten derart verändert, dass insbesondere Merkmale, die eine Identifikation des Untersuchungsobjekts ermöglichen würden, entfernt wurden.

Wie bereits erläutert wurde, kann ein Segmentierungsalgorithmus zur Segmentierung des bzw. des Weiteren anatomischen Bereichs durch ein Verfahren des Maschinenlernens trainiert werden. Ein Beispiel hierfür wird im Folgenden mit Bezug auf Fig. 6 erläutert. Hierbei wird der Segmentierungsalgorithmus 76 durch ein Verfahren 77 des Maschinenlernens trainiert, wobei insbesondere seine Parameter 91 festgelegt werden.

Es kann beispielsweise ein überwachtes Lernen genutzt werden, bei dem eine Vielzahl von Trainingsdatensätzen 78 genutzt wird, die jeweils Bilddaten 79 und eine zugehörige Segmentierungsinformation 80 umfassen. Die Segmentierungsinformation 80 kann jeweils eine Sollsegmentierung des anatomischen Bereichs 81 und des Weiteren anatomischen Bereichs 82 beschreiben. Im Rahmen des Verfahrens 77 des Maschinenlernens können beispielsweise die Parameter 91, insbesondere durch eine Fehlerrückführung oder Ähnliches, variiert werden, bis eine Abweichung einer Segmentierung die aus einer Segmentierung jeweiliger Bilddaten 79 durch den Segmentierungsalgorithmus 76 resultiert, von der durch die Segmentierungsinformation 80 für diesen Trainingsdatensatz 78 vorgegebenen Segmentierung minimal ist. Beispielsweise kann eine ein Maß für die Abweichung betreffende Kostenfunktion minimiert werden.

Fig. 7 zeigt ein entsprechendes Verfahren 85 für ein Maschinenlernen, das Parameter 84 eines Erzeugungsalgorithmus 83 bestimmt, der dazu dient, unmittelbar aus den Eingangsdaten 33 die Ausgangsdaten 37 zu ermitteln, das heißt, die gesamte Modifikation der Eingangsdaten selbst durchzuführen. Das Vorgehen entspricht weitgehend dem zu Fig. 6 erläuterten Vorgehen, wobei andere Trainingsdatensätze 86 genutzt werden, um den Algorithmus 83 zu trainieren. Die Trainingsdatensätze 86 umfassen jeweils Bilddaten 87 und veränderte Bilddaten 88, wobei der weitere anatomische Bereich 89 in den veränderten Bilddaten 88 wie gewünscht verändert ist. Die veränderten Bilddaten 88 können beispielsweise durch einen menschlichen Experten erzeugt werden, der gemäß seiner Fähigkeiten versucht, eine maximale Anonymisierung der jeweiligen Bilddaten 87 zu erreichen.

Im Rahmen des Verfahrens 85 des Maschinenlernens können die Parameter 84 dann, beispielsweise durch eine Fehlerrückführung, derart variiert werden, dass das Verarbeitungsergebnis einer Verarbeitung der Bilddaten 87 durch den Algorithmus 83 möglichst ähnlich zu den veränderten Bilddaten 88 ist.

In Fig. 7 wurde zunächst davon ausgegangen, dass die Eingangsdaten und Ausgangsdaten des Verfahrens zur Bereitstellung von Ausgangsdaten, die zum Training und/oder zur Validierung eines Algorithmus dienen, Bilddaten sind. Sollen hierbei Rohdaten verarbeitet werden, kann der Trainingsdatensatz statt der Bilddaten 87 und der veränderten Bilddaten 88 Rohdaten 63 und veränderte Rohdaten 71 enthalten.

Alternativ wäre es möglich, den Algorithmus 83 zur Verarbeitung von Bilddatensätzen zu trainieren und vor Anwendung des Algorithmus 83 einen Rekonstruktionsalgorithmus 64 und nach Anwendung des Algorithmus 83 einen Abbildungsalgorithmus 70 zu verwenden, wie dies zu Fig. 4 erläutert wurde.

Mit Bezug auf die Fig. 8 und 9 werden im Folgenden am Beispiel eines neuronalen Netzes bzw. eines faltenden neuronalen Netzes Strukturen von Algorithmen erläutert, die durch Maschinenlernen trainierbar sind. Beispielsweise können entsprechende Strukturen für den Algorithmus 41, den Segmentierungsalgorithmus 76 und/oder den Erzeugungsalgorithmus 83 verwendet werden. Die Strukturen werden jeweils an einfachen Beispielen beschrieben, die für reale Anwendungen entsprechend erweitert werden können.

Fig. 8 zeigt ein Ausführungsbeispiel eines künstlichen neuronalen Netzes 1. Englische Ausdrücke für das künstliche neuronale Netz 1 sind "artificial neural network", neural network", "artificial neural net" oder "neural net".

Das künstliche neuronale Netzwerk 1 umfasst Knoten 6 bis 18 (nodes) und Kanten 19 bis 21 (edges), wobei jede Kante 19 bis 21 eine gerichtete Verbindung von einem ersten Knoten 6 bis 18 zu einem zweiten Knoten 6 bis 18 ist. Im Allgemeinen sind der erste Knoten 6 bis 18 und der zweite Knoten 6 bis 18 unterschiedliche Knoten 6 bis 18, es ist jedoch auch denkbar, dass der erste Knoten 6 bis 18 und der zweite Knoten 6 bis 18 identisch sind. Beispielsweise ist in Fig. 1 die Kante 19 eine gerichtete Verbindung von dem Knoten 6 zu dem Knoten 9 und die Kante 21 ist eine gerichtete Verbindung von dem Knoten 16 zu dem Knoten 18. Eine Kante 19 bis 21 von einem ersten Knoten 6 bis 18 zu einem zweiten Knoten 6 bis 18 wird als eingehende Kante ("ingoing edge") für den zweiten Knoten 6 bis 18 und als ausgehende Kante ("outgoing edge") für den ersten Knoten 6 bis 18 bezeichnet.

In diesem Ausführungsbeispiel können die Knoten 6 bis 18 des künstlichen neuronalen Netzes 1 in Schichten 2 bis 5 (layers) angeordnet werden, wobei die Schichten 2 bis 5 eine intrinsische Ordnung aufweisen können, die durch die Kanten 19 bis 21 zwischen den Knoten 6 bis 18 eingeführt wird. Insbesondere können Kanten 19 bis 21 nur zwischen benachbarten Schichten von Knoten vorgesehen sein. Im dargestellten Ausführungsbeispiel existiert eine Eingabeschicht 2, die lediglich die Knoten 6, 7, 8 aufweist, jeweils ohne eingehende Kante. Die Ausgangsschicht 5 umfasst nur die Knoten 17, 18, jeweils ohne ausgehende Kanten, wobei ferner versteckte Schichten 3 und 4 zwischen der Eingangsschicht 2 und der Ausgangsschicht 5 liegen. Im Allgemeinen Fall kann die Zahl der versteckten Schichten 3, 4 beliebig gewählt werden. Die Zahl der Knoten 6, 7, 8 der Eingabeschicht 2 entspricht üblicherweise der Zahl der Eingabewerte in das neuronale Netzwerk 1, und die Zahl der Knoten 17, 18 in der Ausgangsschicht 5 entspricht üblicherweise der Zahl der Ausgabewerte des neuronalen Netzwerks 1.

Insbesondere kann den Knoten 6 bis 18 des neuronalen Netzwerks 1 eine (reale) Zahl zugeordnet werden. Dabei bezeichnet $x^{(n)}_i$ den Wert des i-ten Knoten 6 bis 18 der n-ten Schicht 2 bis 5. Die Werte der Knoten 6, 7, 8 der Eingabeschicht 2 sind äquivalent zu den Eingabewerten des neuronalen Netzwerks 1, während die Werte der Knoten 17, 18 der Ausgangsschicht 113 äquivalent zu den Ausgabewerten des neuronalen Netzwerks 1 sind. Darüber hinaus kann jeder Kante 19, 20, 21 ein Gewicht in Form einer realen Zahl zugeordnet sein. Insbesondere ist das Gewicht eine reale Zahl im Intervall [-1, 1] oder im Intervall [0, 1,]. Dabei bezeichnet $w^{(m,n)}_{i,j}$ das Gewicht der Kante zwischen dem i-ten Knoten 6 bis 18 der m-ten Schicht 2 bis 5 und dem j-ten Knoten 6 bis 18 der n-ten Schicht 2 bis 5. Ferner wird die Abkürzung $w^{(n)}_{i,j}$ für das Gewicht $w^{(n,n+1)}_{i,j}$ definiert.

Um Ausgangswerte des neuronalen Netzes 1 zu berechnen, werden die Eingangswerte durch das neuronale Netz 1 propagiert. Insbesondere können die Werte der Knoten 6 bis 18 der (n+1)-ten Schicht 2 bis 5 basierend auf den Werten der Knoten 6 bis 18 der n-ten Schicht 2 bis 5 berechnet werden durch

$$x^{(n+1)}_j = f\left(\sum_i x^{(n)}_i \cdot w^{(n)}_{i,j}\right).$$

Dabei ist f eine Transferfunktion, die auch als Aktivierungsfunktion bezeichnet werden kann. Bekannte Transferfunktionen sind Stufenfunktionen, Sigmoidfunktionen (beispielsweise die logistische Funktion, die verallgemeinerte logistische Funktion, der Tangens hyperbolicus, der Arkustangens, die Fehlerfunktion, die Smoothstep-Funktion) oder Gleichrichterfunktionen (rectifier). Die Transferfunktion wird im Wesentlichen für Normierungszwecke verwendet.

Insbesondere werden die Werte schichtweise durch das neuronale Netz 1 propagiert, wobei Werte der Eingangsschicht 2 durch die Eingangsdaten des neuronalen Netzes 1 gegeben sind. Werte der ersten versteckten Schicht 3 können basierend auf den Werten der Eingangsschicht 2 des neuronalen Netzes 1 berechnet werden, Werte der zweiten versteckten Schicht 4 können basierend auf den Werten in der ersten versteckten Schicht 3 berechnet werden usw.

Um die Werte $w^{(n)}_{i,j}$ für die Kanten 19 bis 21 festlegen zu können, muss das neuronale Netz 1 unter Verwendung von Trainingsdaten trainiert werden. Insbesondere umfassen Trainingsdaten Trainingseingangsdaten und Trainingsausgangsdaten, die im Folgenden als $t_i$ bezeichnet werden. Für einen Trainingsschritt wird das neuronale Netzwerk 1 auf die Trainingseingangsdaten angewendet, um berechnete Ausgangsdaten zu ermitteln. Insbesondere umfassen die Trainingsausgangsdaten und die berechneten Ausgangsdaten eine Zahl von Werten, wobei sich die Zahl als die Zahl der Knoten 17, 18 der Ausgangsschicht 5 bestimmt.

Insbesondere wird ein Vergleich zwischen den berechneten Ausgangsdaten und den Trainingsausgangsdaten verwendet, um die Gewichte innerhalb des neuronalen Netzes 1 rekursiv anzupassen (Rückpropagierungsalgorithmus - "back propagation algorithm"). Insbesondere können die Gewichte entsprechend

$$w'^{(n)}_{i,j} = w^{(n)}_{i,j} - \gamma \cdot \delta^{(n)}_j \cdot x^{(n)}_i$$

geändert werden, wobei $\gamma$ eine Lernrate ist und die Zahlen $\delta^{(n)}_j$ rekursiv berechnet werden können als

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

basierend auf $\delta^{(n+1)}_j$, wenn die (n+1)-te Schicht nicht die Ausgangsschicht 5 ist, und

$$\delta^{(n)}_j = \left(x^{(n+1)}_k - t^{(n+1)}_j\right) \cdot f'\left(\sum_i x^{(n)}_i \cdot w^{(n)}_{i,j}\right)$$

falls die (n+1)-te Schicht die Ausgangsschicht 5 ist, wobei f' die erste Ableitung der Aktivierungsfunktion ist und $y_j^{(n+1)}$ der Vergleichstrainingswert für den j-ten Knoten 17, 18 der Ausgangsschicht 5 ist.

Im Folgenden wird im Hinblick auf Fig. 2 auch ein Beispiel für ein Convolutional Neural Network (CNN) gegeben. Dabei ist zu beachten, dass der Ausdruck "Schicht" ("layer") dort auf leicht andere Art und Weise als für klassische neuronale Netze eingesetzt wird. Für ein klassisches neuronales Netz verweist der Ausdruck "Schicht" nur auf den Satz von Knoten, der eine Schicht bildet, mithin eine bestimmte Generation von Knoten. Für ein Convolutional Neural Network, wird der Ausdruck "Schicht" oft als ein Objekt benutzt, das aktiv Daten verändert, in anderen Worten als ein Satz von Knoten derselben Generation und entweder der Satz eingehender oder ausgehender Kanten.

Fig. 2 zeigt ein Ausführungsbeispiel eines Convolutional Neural Network 22. In dem dargestellten Ausführungsbeispiel umfasst das Convolutional Neural Network 22 eine Eingangsschicht 23, eine Faltungsschicht 24 (Convolutional Layer), eine Pooling-Schicht 25, eine vollständig verbundene Schicht 26 und eine Ausgangsschicht 27. In alternativen Ausgestaltungen kann das Convolutional Neural Network 22 mehrere Faltungsschichten 24, mehrere Pooling-Schichten 25 und mehrere vollständig verbundenen Schichten 26, ebenso wie andere Arten von Schichten, enthalten. Die Reihenfolge der Schichten kann beliebig gewählt werden, wobei üblicherweise vollständig verbundene Schichten 26 die letzten Schichten vor der Ausgangsschicht 27 bilden.

Insbesondere können innerhalb eines Convolutional Neural Network 22 die Knoten 28 bis 32 einer der Schichten 23 bis 27 als d-dimensionale Matrix oder als d-dimensionales Bild angeordnet sein. Insbesondere kann im zweidimensionalen Fall der Wert eines Knotens 28 bis 32 mit den Indices i, j in der n-ten Schicht 23 bis 27 als $x^{(n)}[i,j]$ bezeichnet werden. Es ist darauf hinzuweisen, dass die Anordnung der Knoten 28 bis 31 einer Schicht 23 bis 27 keinerlei Auswirkung auf die Berechnungen innerhalb des Convolutional Neural Network 22 als solches hat, da diese Auswirkung ausschließlich durch die Struktur und die Gewichte der Kanten gegeben sind.

Eine Faltungsschicht 24 ist insbesondere dadurch ausgezeichnet, dass die Struktur und die Gewichte der eingehenden Kanten eine Faltungsoperation basierend auf einer bestimmten Zahl von Kernen bildet. Insbesondere können die Struktur und die Gewichte der eingehenden Kanten so gewählt werden, dass die Werte $x_k^{(n)}$ der Knoten 29 der Faltungsschicht 24 als eine Faltung $x_k^{(n)} = K_k * x^{(n-1)}$ basierend auf den Werten $x^{(n-1)}$ der Knoten 28 der vorangehenden Schicht 23 ermittelt werden, wobei die Faltung * im zweidimensionalen Fall definiert werden kann als

$$x_k^{(n)}[i,j] = (K_k * x^{(n-1)})[i,j] = \sum_{i'} \sum_{j'} K_k[i',j'] \cdot x^{(n-1)}[i-i', j-j'].$$

Darin ist der k-te Kern $K_k$ eine d-dimensionale Matrix, in diesem Ausführungsbeispiel eine zweidimensionale Matrix, die üblicherweise klein im Vergleich zur Zahl der Knoten 28 bis 32 ist, beispielsweise eine 3x3-Matrix oder eine 5x5-Matrix. Insbesondere impliziert dies, dass die Gewichte der eingehenden Kanten nicht unabhängig sind, sondern so gewählt sind, dass sie die obige Faltungsgleichung erzeugen. Im Beispiel für einen Kern, der eine 3x3-Matrix bildet, existieren nur neun unabhängige Gewichte (wobei jeder Eintrag der Kern-Matrix einem unabhängigen Gewicht entspricht), ungeachtet der Zahl der Knoten 28 bis 32 in der entsprechenden Schicht 23 bis 27. Insbesondere ist für eine Faltungsschicht 24 die Zahl der Knoten 29 in der Faltungsschicht 24 äquivalent der Zahl der Knoten 28 in der vorangehenden Schicht 23 multipliziert mit der Zahl der Faltungskerne.

Wenn die Knoten 28 der vorangehenden Schicht 23 als eine d-dimensionale Matrix angeordnet sind, kann die Nutzung der Mehrzahl von Kernen als Hinzufügung einer weiteren Dimension, die auch als Tiefendimension bezeichnet wird, verstanden werden, so dass die Knoten 29 der Faltungsschicht 24 als eine (d+1)-dimensionale Matrix angeordnet sind. Wenn die Knoten 28 der vorangehenden Schicht 23 bereits als eine (d+1)-dimensionale Matrix mit einer Tiefendimension angeordnet sind, kann die Nutzung einer Mehrzahl von Faltungskernen als Expansion entlang der Tiefendimension verstanden werden, so dass die Knoten 29 der Faltungsschicht 221 gleichermaßen als eine (d+1)-dimensionale Matrix angeordnet sind, wobei die Größe der (d+1)-dimensionalen Matrix in der Tiefendimension um den durch die Zahl der Kerne gebildeten Faktor größer ist als in der vorangehenden Schicht 23.

Der Vorteil der Nutzung von Faltungsschichten 24 ist, dass die räumlich lokale Korrelation der Eingangsdaten ausgenutzt werden kann, indem ein lokales Verbindungsmuster zwischen Knoten benachbarter Schichten geschaffen wird, insbesondere dadurch, dass jeder Knoten nur zu einem kleinen Bereich der Knoten der vorangehenden Schicht Verbindungen aufweist.

Im dargestellten Ausführungsbeispiel umfasst die Eingangsschicht 23 36 Knoten 28, die als eine zweidimensionale 6x6-Matrix angeordnet sind. Die Faltungsschicht 24 umfasst 72 Knoten 29, die als zwei zweidimensionale 6x6-Matrizen angeordnet sind, wobei jede der beiden Matrizen das Ergebnis einer Faltung der Werte der Eingangsschicht 23 mit einem Faltungskern ist. In gleicher Weise können die Knoten 29 der Faltungsschicht 24 als in einer dreidimensionalen 6x6x2-Matrix angeordnet verstanden werden, wobei die zuletzt genannte Dimension die Tiefendimension ist.

Eine Pooling-Schicht 25 zeichnet sich dadurch aus, dass die Struktur und die Gewichte der eingehenden Kanten sowie die Aktivierungsfunktion ihrer Knoten 30 eine Pooling-Operation basierend auf einer nicht linearen Pooling-Funktion f definieren. Beispielsweise können im zweidimensionalen Fall die Werte $x^{(n)}$ der Knoten 30 der Pooling-Schicht 25 basierend auf den Werten $x^{(n+1)}$ der Knoten 29 der vorangehenden Schicht 24 als

$$x^{(n)}[i,j] = f(x^{(n-1)}[id_1, jd_2], …, x^{(n-1)}[id_1+d_1-1, jd_2+d_2-1])$$

berechnet werden. In anderen Worten kann durch die Verwendung einer Pooling-Schicht 25 die Zahl der Knoten 29, 30 reduziert werden, indem eine Anzahl von $d_1*d_2$ benachbarter Knoten 29 in der vorangehenden Schicht 24 durch einen einzelnen Knoten 30 ersetzt wird, der als eine Funktion der Werte der genannten Anzahl benachbarter Knoten 29 berechnet wird. Insbesondere kann die Pooling-Funktion f eine Maximusfunktion, eine Durchschnittsbildung oder die L2-Norm sein. Insbesondere können für eine Pooling-Schicht 25 die Gewichte der eingehenden Kanten festgelegt sein und nicht durch Training modifiziert sein.

Der Vorteil der Verwendung einer Pooling-Schicht 25 ist, dass die Zahl der Knoten 29, 30 und die Zahl der Parameter reduziert wird. Dies führt zu einer Reduktion der notwendigen Berechnungsmenge innerhalb des Convolutional Neural Network 22 und somit zu einer Unterdrückung einer Überanpassung.

Im dargestellten Ausführungsbeispiel handelt es sich bei der Pooling-Schicht 25 um eine Max-Pooling-Schicht, in der vier benachbarte Knoten durch einen einzigen Knoten ersetzt werden, dessen Wert durch das Maximum der Werte der vier benachbarten Knoten gebildet wird. Das Max-Pooling wird auf jede d-dimensionale Matrix der vorherigen Schicht angewendet; in diesem Ausführungsbeispiel wird das Max-Pooling auf jede der zwei zweidimensionalen Matrizen angewendet, so dass sich die Zahl der Knoten von 72 auf 18 reduziert.

Eine vollständig verbundene Schicht 26 zeichnet sich dadurch aus, dass eine Mehrzahl, insbesondere alle, Kanten zwischen den Knoten 30 der vorherigen Schicht 25 und den Knoten 31 der vollständig verbundenen Schicht 26 vorhanden sind, wobei das Gewicht jeder der Kanten individuell angepasst werden kann. In diesem Ausführungsbeispiel werden die Knoten 30 der der vollständig verbundenen Schicht 26 vorangehenden Schicht 25 sowohl als zweidimensionale Matrizen als auch als nichtzusammenhängende Knoten (dargestellt als eine Zeile von Knoten, wobei die Zahl der Knoten zur besseren Darstellbarkeit reduziert wurde) gezeigt. In diesem Ausführungsbeispiel ist die Zahl der Knoten 31 in der vollständig verbundenen Schicht 26 gleich der Anzahl der Knoten 30 in der vorangehenden Schicht 25. In alternativen Ausführungsformen kann die Zahl der Knoten 30, 31 unterschiedlich sein.

Darüber hinaus werden in diesem Ausführungsbeispiel die Werte der Knoten 32 der Ausgangsschicht 27 bestimmt, indem die Softmax-Funktion auf die Werte der Knoten 31 der vorangehenden Schicht 26 angewendet wird. Durch Anwendung der Softmax-Funktion ist die Summe der Werte aller Knoten 32 der Ausgangsschicht 27 eins und alle Werte aller Knoten 32 der Ausgangsschicht sind reelle Zahlen zwischen 0 und 1. Wenn das Convolutional Neural Network 22 zur Klassifizierung von Eingangsdaten genutzt wird, können insbesondere die Werte der Ausgangsschicht 27 als Wahrscheinlichkeit dafür interpretiert werden, dass die Eingangsdaten in eine der unterschiedlichen Klassen fallen.

Ein Convolutional Neural Network 22 kann ebenso eine ReLU-Schicht aufweisen, wobei ReLU als Akronym für "rectified linear units" steht. Insbesondere ist die Zahl der Knoten und die Struktur der Knoten innerhalb einer ReLU-Schicht äquivalent zu der Zahl der Knoten und der Strukturen der Knoten der vorangehenden Schicht. Der Wert jedes Knotens in der ReLU-Schicht kann insbesondere durch Anwendung einer Gleichrichtungsfunktion (rectifier function) auf den Wert des entsprechenden Knoten der vorangehenden Schicht berechnet werden. Beispiele für Gleichrichterfunktionen sind f(x)=max(0,x), der Tangens hyperbolicus oder die Sigmoidfunktion.

Convolutional Neural Networks 22 können insbesondere basierend auf den Rückpropagierungsalgorithmus trainiert werden. Um eine Überanpassung (overfitting) zu vermeiden, können Verfahren der Regularisierung eingesetzt werden, beispielsweise ein Dropout einzelner Knoten 28 bis 32, stochastisches Pooling, Nutzen von künstlichen Daten, Gewichtszerfall basierend auf der L1- oder der L2-Norm oder Maximalnorm-Einschränkungen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Computerimplementiertes Verfahren zur Bereitstellung von Ausgangsdaten (37), die zum Training und/oder zur Validierung eines Algorithmus (41) dienen, dessen Verarbeitungsergebnis (47) einen durch die Ausgangsdaten (37) abgebildeten anatomischen Bereich (52) eines Untersuchungsobjekts betrifft, umfassend die Schritte:

- Empfangen von Eingangsdaten (33), die Rohdaten (63) eines medizinischen Bildgebungsverfahrens sind, wobei durch die Rohdaten (63) der anatomische Bereich (52, 57, 81) und wenigstens ein weiterer anatomischer Bereich (53, 58, 59, 82, 89) des Untersuchungsobjekts zumindest teilweise abgebildet werden,

- Erzeugen von Ausgangsdaten (37), indem die Rohdaten (63) derart modifiziert werden, dass die Abbildung des Weiteren anatomischen Bereichs (52, 57, 81) durch die Rohdaten (63) verändert, insbesondere verfremdet, wird, und

- Bereitstellen der Ausgangsdaten (37), dadurch charakterisiert dass die Rohdaten (63) verändert werden, indem aus den Rohdaten (63) durch einen Rekonstruktionsalgorithmus (64) wenigstens ein Bilddatensatz (65, 66) erzeugt wird, wobei der weitere anatomische Bereich (53, 58, 59, 82, 89) in dem Bilddatensatz (65, 66) segmentiert wird und für jeden Bilddatensatz (65, 66) ein synthetischer Bilddatensatz (73), der ausschließlich den wenigstens einen weiteren anatomischen Bereich (53, 58, 59, 82, 89) abbildet, generiert wird, wobei der wenigstens eine synthetische Bilddatensatz (73) durch einen Abbildungsalgorithmus (70) verarbeitet wird, um synthetische Rohdaten (74) zu erzeugen, wobei die Ausgangsdaten (37) erzeugt werden, indem die synthetischen Rohdaten (74) von den Rohdaten (63) subtrahiert werden.

2. Computerimplementiertes Verfahren nach Anspruch 1, **dadurch gekennzeichnet, dass** die Rohdaten (63) derart modifiziert werden, dass die Abbildung des Weiteren anatomischen Bereich (53, 58, 59, 82, 89), nämlich wenigstens eines Zahnes oder wenigstens eines Auges oder einer Haut oder einer subkutanen Fettschicht des Untersuchungsobjekts, verändert, insbesondere verfremdet, wird.

3. Computerimplementiertes Verfahren nach einem der vorangehenden Ansprüche, **dadurch gekennzeichnet, dass** der weitere anatomische Bereich (53, 58, 59, 82, 89) in dem wenigstens einen Bilddatensatz (65, 66) durch einen Segmentierungsalgorithmus (55, 76) segmentiert wird, der durch ein Verfahren (77) des Maschinenlernens trainiert ist.

4. Computerimplementiertes Verfahren nach Anspruch 1 oder 2, **dadurch gekennzeichnet, dass** die Ausgangsdaten (37) erzeugt werden, indem ein Erzeugungsalgorithmus (83), der durch ein Verfahren (85) des Maschinenlernens trainiert ist, auf die Rohdaten (63) angewandt wird.

5. Computerimplementiertes Verfahren nach einem der Ansprüche 2- 3 2- oder 4, **dadurch gekennzeichnet, dass** als der Segmentierungsalgorithmus (55, 76) und/oder als der Erzeugungsalgorithmus (85) ein Algorithmus verwendet wird, der unter Verwendung von Trainingsdatensätzen (78, 86) trainiert ist, die jeweils einerseits Rohdaten (63) oder wenigstens einen Bilddatensatz (65, 66) und andererseits eine Segmentierungsinformation (80) umfassen, wobei die Segmentierungsinformation (8) jeweils eine Segmentierung des anatomischen Bereichs (52, 57, 81) und/oder des Weiteren anatomischen Bereichs (53, 58, 59, 82, 89) in dem Bilddatensatz (65, 66) oder in wenigstens einem anhand der Rohdaten (63) vorgegebenen Bilddatensatz (65, 66) beschreibt.

6. Computerimplementiertes Verfahren nach einem der Ansprüche 3 bis 5, **dadurch gekennzeichnet, dass** als der Segmentierungsalgorithmus (55, 76) und/oder als der Erzeugungsalgorithmus (83) ein Algorithmus verwendet wird, der unter Verwendung von Trainingsdatensätzen (78, 86) trainiert ist, die jeweils einerseits Rohdaten (63) und andererseits veränderte Rohdaten (71) oder wenigstens einen veränderten Bilddatensatz (68, 69) umfassen, die oder der derart verändert sind oder ist, dass die Abbildung des Weiteren anatomischen Bereichs (53, 58, 59, 82, 89) durch die veränderten Rohdaten (71) ausgehend von den Rohdaten (63) oder durch den veränderten Bilddatensatz (68, 69) ausgehend von einem jeweiligen aus den Rohdaten (63) auf vorgegebene Weise ermittelten Bilddatensatz (65, 66) wie gewünscht verändert, insbesondere verfremdet, ist.

7. Computerimplementiertes Verfahren nach einem der vorangehenden Ansprüche, **dadurch gekennzeichnet, dass** die Eingangsdaten (33) Computertomographiedaten oder Magnetresonanztomographiedaten oder Einzelphotonenemissionstomographiedaten oder Positronenemissionstomographiedaten sind.

8. Computerimplementiertes Verfahren nach Anspruch 1, zur Bereitstellung eines trainierten Algorithmus (41) durch ein Verfahren des Maschinenlernens die folgenden weiteren Schritte umfassend:

- Empfangen von Trainingsdaten, die Ausgangsdaten (37) des Verfahrens nach einem der Ansprüche 1 bis 7 sind oder umfassen oder die auf diesen Ausgangsdaten (37) basieren,
- Trainieren des Algorithmus (41) auf Basis der Trainingsdaten, und
- Bereitstellen des trainierten Algorithmus (41).

9. Computerimplementiertes Verfahren nach Anspruch 1, zur Bereitstellung eines Verarbeitungsergebnisses (37), die folgenden weiteren Schritte umfassend:

   - Empfang von Eingangsdaten (43),
   - Ermitteln des Verarbeitungsergebnisses durch Anwenden eines trainierten Algorithmus (41) auf die Eingangsdaten (43), wobei der trainierte Algorithmus (41) auf Trainingsdaten basiert, die Ausgangsdaten (37) des Verfahrens gemäß einem der Ansprüche 1 bis 7 sind oder umfassen oder auf diesen Ausgangsdaten basieren, und/oder durch ein Verfahren gemäß Anspruch 8 trainiert ist,
   - Bereitstellen des Verarbeitungsergebnisses (47).

10. 11. Bereitstellungs- und/oder Trainingseinrichtung, **dadurch gekennzeichnet, dass** sie zur Durchführung des Verfahrens gemäß eines der Ansprüche 1 bis 9 eingerichtet ist.

11. Computerprogramm für eine Datenverarbeitungseinrichtung, mit Programmanweisungen , die bei einer Durchführung auf einer Verarbeitungseinrichtung ein Verfahren nach einem der Ansprüche 1 bis 9 durchführen.

12. Computerlesbarer Datenträger, umfassend ein Computerprogramm nach Anspruch 11.

**Claims**

1. Computer-implemented method for providing output data (37), which is used for training and/or validating an algorithm (41), the processing result (47) of which relates to an anatomical region (52) of an examination subject that is mapped by the output data (37), comprising the steps:

   - receiving input data (33), which is raw data (63) of a medical imaging method, wherein the anatomical region (52, 57, 81) and at least one further anatomical region (53, 58, 59, 82, 89) of the examination subject are at least partially mapped by the raw data (63),
   - generating output data (37) by the raw data (63) being modified in such a manner that the mapping of the further anatomical region (52, 57, 81) by the raw data (63) is altered, in particular distorted, and
   - providing the output data (37), **characterised in that** the raw data (63) is altered by at least one image data set (65, 66) being generated from the raw data (63) by a reconstruction algorithm (64), wherein the further anatomical region (53, 58, 59, 82, 89) in the image data set (65, 66) is segmented and for each image data set (65, 66) a synthetic image data set (73), which exclusively maps the at least one further anatomical region (53, 58, 59, 82, 89), is generated, wherein the at least one synthetic image data set (73) is processed by a mapping algorithm (70) in order to generate synthetic raw data (74), wherein the output data (37) is generated by the synthetic raw data (74) being subtracted from the raw data (63).

2. Computer-implemented method according to claim 1, **characterised in that** the raw data (63) is modified in such a manner that the mapping of the further anatomical region (53, 58, 59, 82, 89), namely of at least one tooth or at least one eye or a skin or a subcutaneous layer of fat of the examination subject, is altered, in particular distorted.

3. Computer-implemented method according to one of the preceding claims, **characterised in that** the further anatomical region (53, 58, 59, 82, 89) in the at least one image data set (65, 66) is segmented by a segmentation algorithm (55, 76) which is trained by a machine learning method (77).

4. Computer-implemented method according to claim 1 or 2, **characterised in that** the output data (37) is generated by a generation algorithm (83), which is trained by a machine learning method (85), being applied to the raw data (63).

5. Computer-implemented method according to one of claims 3 or 4, **characterised in that** what is used as the segmentation algorithm (55, 76) and/or as the generation algorithm (85) is an algorithm, which is trained with the use of training data sets (78, 86) that in each case comprise raw data (63) or at least one image data set (65, 66) on one side and an item of segmentation information (80) on the other side, wherein the segmentation information (8) in each case describes a segmentation of the anatomical region (52, 57, 81) and/or of the further anatomical region (53, 58, 59, 82, 89) in the image data set (65, 66) or in at least one image data set (65, 66) predefined on the basis of the raw data (63).

6. Computer-implemented method according to one of claims 3 to 5, **characterised in that** what is used as the segmentation algorithm (55, 76) and/or as the generation algorithm (83) is an algorithm, which is trained with the use of training data sets (78, 86) that in each case comprise raw data (63) on one side and altered raw data (71) or at least one altered image data set (68, 69) on the other side, which are or is altered in such a manner that the mapping of the further anatomical region (53, 58, 59, 82, 89) is altered, in particular distorted, in the desired manner by the altered raw data (71) starting from the raw data (63) or by the altered image data set (68, 69) starting from a respective image data set (65, 66) ascertained from the raw data (63) in a predefined manner.

7. Computer-implemented method according to one of the preceding claims, **characterised in that** the input data (33) is computed tomography data or magnetic resonance tomography data or single photon emission tomography data or positron emission tomography data.

8. Computer-implemented method according to claim 1, for providing a trained algorithm (41) by way of a machine learning method, the following further steps comprising:

- receiving training data, which is or comprises output data (37) of the method according to one of claims 1 to 7 or is based on said output data (37),
- training the algorithm (41) on the basis of the training data, and
- providing the trained algorithm (41).

9. Computer-implemented method according to claim 1, for providing a processing result (37), the following further steps comprising:

- receiving input data (43),
- ascertaining the processing result by applying a trained algorithm (41) to the input data (43), wherein the trained algorithm (41) is based on training data that is or comprises output data (37) of the method according to one of claims 1 to 7 or is based on said output data, and/or is trained by a method according to claim 8,
- providing the processing result (47).

10. Provision and/or training facility, **characterised in that** it is configured for performing the method according to one of claims 1 to 9.

11. Computer program for a data processing facility, with program instructions that perform a method according to one of claims 1 to 9 when performed on a processing facility.

12. Computer-readable data carrier, comprising a computer program according to claim 11.

**Revendications**

1. Procédé mis en œuvre par ordinateur de mise à disposition de données (37) de sortie, servant à l'apprentissage et/ou la validation d'un algorithme (41), dont le résultat (47) du traitement concerne une partie (52) anatomique, représentée par les données (37) de sortie, d'un objet à examiner, comprenant les stades :

- réception de données (33) d'entrée, qui sont des données (63) brutes d'un procédé d'imagerie médicale, dans lequel, par les données (63) brutes, on représente au moins en partie la partie (52, 57, 81) anatomique et au moins une autre partie (53, 58, 59, 82, 89) anatomique de l'objet à examiner,
- production de données (37) de sortie, en modifiant des données (63) brutes, de manière à ce que la représentation de l'autre partie (52, 57, 81) anatomique par les données (63) brutes soit modifiée, notamment rendue étrangère, et
- mise à disposition des données (37) de sortie, **caractérisé en ce que** l'on modifie les données (63) brutes en produisant au moins un ensemble (65, 66) de données d'images, à partir des données (63) brutes par un algorithme (64) de reconstruction, dans lequel on segmente l'autre partie (53, 58, 59, 82, 89) anatomique dans l'ensemble (65, 66) de données d'image et, pour chaque ensemble (65, 66) de données d'image on crée un ensemble (73) synthétique de données d'image, qui représente exclusivement la au moins une autre partie (53, 58, 59, 82, 89) anatomique, dans lequel on traite le au moins un ensemble (73) synthétique de données d'image par un algorithme (70) de représentation pour produire des données (74) brutes synthétiques, dans lequel on produit les données (37) de sortie en soustrayant les données (74) brutes synthétiques des données (63) brutes.

**2.** Procédé mis en œuvre par ordinateur suivant la revendication 1,
**caractérisé en ce que** l'on modifie les données (63) brutes, de manière à ce que la représentation de l'autre partie (53, 58, 59, 82, 89) anatomique, à savoir d'au moins une dent ou d'au moins un œil ou d'une peau ou d'une couche graisseuse sous cutanée de l'objet à examiner, soit modifiée, notamment rendue étrangère.

**3.** Procédé mis en œuvre par ordinateur suivant l'une des revendications précédentes,
**caractérisé en ce que** l'on segmente l'autre partie (53, 58, 59, 82, 89) anatomique dans le au moins un ensemble (65, 66) de données d'image par un algorithme (55, 76) de segmentation, qui subit un apprentissage par un procédé (77) d'apprentissage automatique.

**4.** Procédé mis en œuvre par ordinateur suivant la revendication 1 ou 2,
**caractérisé en ce que** l'on produit les données (37) de sortie en appliquant aux données (63) brutes un algorithme (83) de production, qui subit un apprentissage par un procédé (85) d'apprentissage automatique.

**5.** Procédé mis en œuvre par ordinateur suivant l'une des revendications 3 ou 4,
**caractérisé en ce que** l'on utilise, comme algorithme (55, 76) de segmentation et/ou comme algorithme (85) de production, un algorithme, qui subit un apprentissage en utilisant des ensembles (78, 86) de données d'apprentissage, qui comprennent chacun d'une part des données (63) brutes ou au moins un ensemble (65, 66) de données d'image et d'autre part une information (80) de segmentation, dans lequel l'information (8) de segmentation décrit respectivement une segmentation de la partie (52, 57, 81) anatomique et/ou de l'autre partie (53, 58, 59, 82, 89) anatomique dans l'ensemble (65, 66) de données d'image ou dans au moins un ensemble (65, 66) de données d'image défini à l'avance à l'aide des données (63) brutes.

**6.** Procédé mis en œuvre par ordinateur suivant l'une des revendications 3 à 5,
**caractérisé en ce que** l'on utilise, comme algorithme (55, 76) de segmentation et/ou comme algorithme (83) de production, un algorithme, qui subit un apprentissage en utilisant des ensembles (78, 86) de données d'apprentissage, qui comprennent chacun d'une part des données (63) brutes et d'autre part des données (71) brutes modifiées ou au moins un ensemble (68, 69) de données d'image modifié, qui sont ou est modifié de manière à ce que la reproduction de l'autre partie (53, 58, 59, 82, 89) anatomique par les données (71) brutes modifiées à partir des données (63) brutes ou par l'ensemble (68, 69) de données d'image modifié à partir d'un ensemble (65, 66) de données d'image déterminé d'une façon définie à l'avance à partir des données (63) brutes, soit modifiée comme souhaité, notamment rendue étrangère.

**7.** Procédé mis en œuvre par ordinateur suivant l'une des revendications précédentes,
**caractérisé en ce que** les données (33) d'entrée sont des données de tomodensitométrie assistée par ordinateur ou des données de tomodensitométrie de résonnance magnétique ou des données de tomodensitométrie par émission de photons individuels ou des données de tomodensitométrie par émission de positrons.

**8.** Procédé mis en œuvre par ordinateur suivant la revendication 1, pour la mise à disposition d'un algorithme (41) ayant subi un apprentissage par un procédé d'apprentissage automatique, comprenant les autres stades suivants :

- réception de données d'apprentissage, qui sont des données (37) de sortie du procédé suivant l'une des revendications 1 à 7
ou comprennent ou reposent sur les données (37) de sortie,
- apprentissage de l'algorithme (41) sur la base des données d'apprentissage, et
- mise à disposition de l'algorithme (41) ayant subi un apprentissage.

**9.** Procédé mis en œuvre par ordinateur suivant la revendication 1, pour la mise à disposition d'un résultat (37) de traitement, qui comprend les autres stades suivants :

- réception de données (43) d'entrée,
- détermination du résultat de traitement par application d'un algorithme (41) ayant subi un apprentissage aux données (43) d'entrée, l'algorithme (41) ayant subi un apprentissage reposant sur des données d'apprentissage, qui sont des données (37) de sortie du procédé suivant l'une des revendications 1 à 7 ou comprennent ou reposent sur ces données de sortie, et/ou subit un apprentissage par un procédé suivant la revendication 8,
- mise à disposition du résultat (47) de traitement.

**10.** Dispositif de mise à disposition et/ou d'apprentissage, **caractérisé en ce qu'**il est conçu pour effectuer le procédé suivant l'une des revendications 1 à 9.

**11.** Programme d'ordinateur pour un dispositif de traitement de données, comprenant des instructions de programme qui, lorsqu'elles sont effectuées sur un dispositif de traitement, effectuent un procédé suivant l'une des revendications 1 à 9.

**12.** Support de données déchiffrable par ordinateur, comprenant un programme d'ordinateur suivant la revendication 11.

FIG 1

54
52
53
33
48

34
35
36

37
49

38
39
40

42
41

51
43

50

44
45
46

47

FIG 2

S1

S2

S3

S4

S5

FIG 3

FIG 4

# FIG 5

63

64

65

72

73

70

74

75

71

## FIG 6

78

79

80

81 82

77

91 ☐ ☐ ... 76

## FIG 7

86

87

88

89

85

84 ☐ ☐ ... 83

FIG 8

FIG 9

EP 3 798 989 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3282379 A1